(19) Europäisches Patentamt
European Patent Office
Office européen des brevets

(11) Veröffentlichungsnummer: **0 013 257**
**B1**

(12) # EUROPÄISCHE PATENTSCHRIFT

(45) Veröffentlichungstag der Patentschrift: **22.06.83**

(21) Anmeldenummer: **79810174.7**

(22) Anmeldetag: **04.12.79**

(51) Int. Cl.³: **G 03 C 1/12**, C 09 B 67/00, C 09 B 23/00, H 01 S 3/20

(54) **Verfahren zur Erhöhung der Lichtechtheit, Fluoreszenzpolarisation und Fluoreszenzquantenausbeute von Cyaninfarbstoffen, stabilisierte Cyaninfarbstoffzubereitung, Verfahren zu ihrer Herstellung und ihre Verwendung.**

(30) Priorität: **22.12.78 CH 13109/78**

(43) Veröffentlichungstag der Anmeldung:
**09.07.80 Patentblatt 80/14**

(45) Bekanntmachung des Hinweises auf die Patenterteilung:
**22.06.83 Patentblatt 83/25**

(84) Benannte Vertragsstaaten:
**BE CH DE FR GB IT**

(56) Entgegenhaltungen:
DE - A - 2 113 127
DE - A - 2 161 184
DE - A - 2 557 916
US - A - 3 893 855
US - A - 4 006 025

**CHEMICAL ABSTRACTS, Band 81, Nr. 26, 30. Dezember 1974, Seite 465, Zusammenfassung Nr. 176562w, Columbus, Ohio, U.S.A.
MINO, JUNROY et al.: "Surfactant micelle. I. Study of the solvent properties near the surface of a surfactant micelle by merocyanine dye"**

(73) Patentinhaber: **CIBA-GEIGY AG
Patentabteilung Postfach
CH-4002 Basel (CH)**

(72) Erfinder: **Grätzel, Michael, Prof. Dr.
Chemin Ponfilet
CH-1093 La Conversion (CH)**
Erfinder: **Steiger, Rolf, Dr.
Russille
CH-1724 Praroman (CH)**

(56) Entgegenhaltungen:
**JOURNAL OF ORGANIC CHEMISTRY, Band 44, Nr. 18, 31. August 1979, American Chemical Society, Easton, PA 18042, US,
M. J. MINCH et al.: "Spectroscopic studies of Hydrophobic Association. Merocyanine Dyes in Cationic and Anionic Micelles" Seiten 3252—5**

**CHEMICAL ABSTRACTS, Band 92, Nr. 23, 9. Juni 1980, Seite 623, Zusammenfassung Nr. 197724t, Columbus, Ohio, US.
Y. KUSUMOTO et al.: "Energy transfer between rhodamine-6G and 3,3'-diethylthiacarbocyanine iodide enhanced in the premicellar region"**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 013 257 B1

# Verfahren zur Erhöhung der Lichtechtheit, Fluoreszenzpolarisation und Fluoreszenzquantenausbeute von Cyaninfarbstoffen, stabilisierte Cyaninfarbstoffzubereitung, Verfahren zu ihrer Herstellung und ihre Verwendung

Die vorliegende Erfindung betrifft ein Verfahren zur Erhöhung der Lichtechtheit, Fluoreszenzpolarisation und Fluoreszenzquantenausbeute von Cyaninfarbstoffen, die durch Assoziierung mit micellären Strukturen stabilisiert sind eine stabilisierte Cyaninfarbstoffzubereitung ein Verfahren zu ihrer Herstellung und ihre Verwendung in selektiven Farbfiltern, photographischen Aufzeichnungsmaterialien oder Farbstofflasern.

Cyaninfarbstoffe und ihre Verwendung als Sensibilisatoren in photographischen Materialien sind z.B. ausführlich beschrieben von C. E. K. Mees et al. in "The Theory of the Photographic Process", 3rd Edition, S. 198 ff. (1966), MacMillan, New York oder von F. M. Hamer "The Cyanine Dyes and related compounds (1964), Interscience Publishers, John Wiley and Sons. Ferner ist aus der DE—A—2.161.184 bekannt, photographische Silberhalogenidemulsionen dadurch zu sensibilisieren, dass man einen Cyaninfarbstoff in einer wässrigen Lösung eines Tensids löst und die erhaltene Lösung den Emulsionen zusetzt. Die Stabilisierung von Dispersionen eines Cyaninfarbstoffs in Wasser mit Hilfe von oberflächenaktiven Verbindungen ist aus US—A—4.006.025 bekannt. Es ist ferner bekannt, dass diese Cyanine (in der Regel Polymethinfarbstoffe) photochemisch (bei Bestrahlung) relativ instabil sind und z.B. Konformationsänderungen unterliegen bzw. sogar in Bruchstücke aufgespalten werden können. Diese Nachteile behindern einen Einsatz z.B. als Farbstofflaser oder als Bildfarbstoffe in photographischen Materialien.

In der Lasertechnik bieten sich die Cyaninfarbstoffe immer wieder an, da es wünschenswert ist, Laser zur Verfügung zu haben, die bei den verschiedensten Wellenlängen des Spektrums (vom ultravioletten bis zum infraroten Bereich) betrieben werden können. Cyaninfarbstoffe weisen die gewünschten hohen Extinktionskoeffizienten, eine Absorption in einem weiten Spektralbereich (350 bis 1200 nm) und gleichzeitig schmale Absorptionsbanden auf. Beispielsweise wird in DE—A—2.113.127 die Verwendung von wässrigen Lösungen von Cyaninfarbstoffen und darin enthaltenen Protonenakzeptorverbindungen oder oberflächenaktiven, Micellen bildenden Verbindungen als Lasermedium beschrieben. Nachteilig wirkt sich jedoch aus, dass insbesondere die offenkettigen Carbocyaninfarbstoffe in verschiedenen stereoisomeren Konfigurationen existieren können und damit den verschiedensten Arten von Rotations- und Translationsschwingungen unterliegen, wodurch z.B. die Stabilität und die in der Lasertechnik so wichtige Fluoreszenzfähigkeit der Cyanine eingeschränkt wird. Die genannten Eigenschaften der Cyaninfarbstoffe (hoher Extinktionskoeffizient, Absorption in einem weiteren Spektralbereich, schmale Absorptionsbanden) dazu ihre weiteren Vorteile, die sich z.B. in der reversiblen Protonierung und der irrevesiblen (reduktiven) Spaltung (Farbänderung) sowie der guten Adsorption (vorzugsweise an Silberhalogenide) zeigen, machen die Cyaninfarbstoffe weiterhin für viele photographische Anwendungen interessant. Solchen Anwendungen stand bisher (ausser bei ihrer Verwendung als Sensibilisatoren) jedoch ihre äusserst geringe Lichtstabilität entgegen.

Aufgabe der vorliegenden Erfindung ist es nun, Cyanine (Cyaninfarbstoffe) mit verbesserter Stabilität bereitzustellen, um sie in den geannten Anwendungsbereichen unter Erzielung einer Erhöhung ihrer Lichtechtheit, Fluoreszenzpolarisation und Fluoreszenzquantenausbeute einsetzen zu können.

Gegenstand der vorliegenden Erfindung ist daher ein Verfahren zur Erhöhung der Lichtechtheit, Fluoreszenspolarisation und Fluoreszenzquantenausbeute von Cyaninfarbstoffe, dadurch gekennzeichnet, dass man Cyaninfarbstoffe mit Hilfe micellärer Strukturen von a) Tensiden und/oder b) tensidischen Kronenätherkomplexen ein- oder zweiwertiger Uebergangsmetallkationen oder c) Tensidgemischen jeweils in Kombination mit nichttensidischen stickstoffhaltigen oder stickstoff- und sauerstoffhaltigen 16- oder 18-gliedgrigen Kronenätherkomplexen ein- oder zweiwertiger Uebergangsmetallkationen stabilisiert.

Weitere Gegenstände der Erfindung sind auch stabilisierte Cyaninfarbstoffzubereitunge, Verfahren zu ihrer Herstellung sowie ihre Verwendung in photographischen Aufzeichnungsmaterialien sowie im Farbstofflaser.

Micellen von Tensiden und Tensidgemischen bilden sich in Tensidlösung als geordnete Aggregationen von Molekülen und/oder Ionen oberhalb einer gewissen Konzentration, der sogenannten kritischen Micell-Konzentration (Kirk-Othmer 19, 573—575).

Als Cyaninfarbstoffe (Cyanine) können die üblichen Mono- oder Polymethin (azomethin)-farbstoffe in Frage kommen, wie saure oder basische Cyanine, Hemicyanine, Streptocyanine, Merocyanine, Azacyanine, Oxonole, Hemioxonole, Styrylfarbstoffe oder andere auch drei- oder mehrkernige Methinfarbstoffe, beispielsweise Rhodancyanine oder Neocyanine. Diese Cyanine sind aus der bereits angegebenen Literatur bekannt.

Bevorzugt sind nun kationische, neutrale, zwitterionische oder anionische Cyanine mit dem Grundgerüst der Formel

(1) 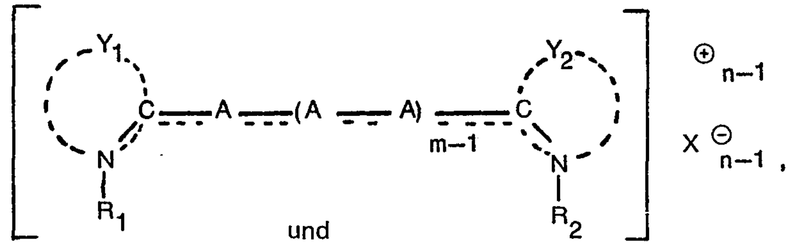

und

(2) 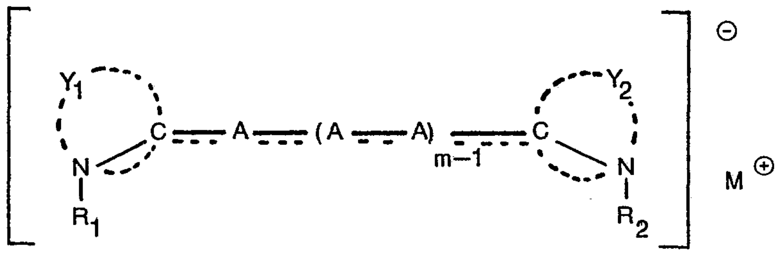

worin A eine gegebenenfalls substituierte Methingruppe oder höchstens ein A ein Stickstoffatom ist, $R_1$ und $R_2$ je ein gegebenenfalls substituiertes Alkyl oder Alkenyl mit bis zu 18 Kohlenstoffatomen und $Y_1$ und $Y_2$ je die notwendigen Atome zur Bildung eines gegebenenfalls substituierten Benzoxazol-, Benzthiazol-, Benzselenazol-, Benzimidazol-, Chinoxalin-, Imidazol-, Pyrazin-, Pyrrol- oder Indolringsystems sind, $X^{\ominus}$ ein Anion, $M^{\oplus}$ ein Kation, m eine ganze Zahl von 1 bis 6, vorzugsweise 1 bis 4, und n 1 oder 2 ist.

Die bevorzugte Bedeutung von A ist —CH= oder —$C(R_3)$=, worin $R_3$ Alkyl mit 1 bis 4 Kohlenstoffatomen, insbesondere Methyl oder Aethyl und ferner Phenyl ist. Bei den Azacyaninen ist —(A=A)— z.B. —N=CH— oder

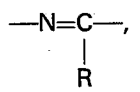

worin R die angegebene Bedeutung hat. Die Alkyl und Alkenylsubstituenten $R_1$ und $R_2$, die gleich oder voneinander verschieden sein können, enthalten vorzugsweise 1 bis 5 Kohlenstoffatome und können verzweigt und insbesondere geradkettig sein, wie z.B. Methyl, Aethyl, n-Propyl, Butyl, Amyl, Allyl oder Methallyl. Als Substituenten können Hydroxyl, Alkoxy mit 1 bis 5 Kohlenstoffatomen, gegebenenfalls mit Halogen, Alkyl(($C_1$—$C_4$) oder —$SO_3H$ substituiertes Phenyl, Carboxyl, Carbalkoxy mit 1 bis 5 Kohlenstoffatomen im Alkoxyteil oder —$SO_3H(SO_3^{\ominus})$ infrage kommen, sodass sich für $R_1$ und $R_2$ z.B. die folgenden Bedeutungen ergeben: Hydroxyäthyl, Hydroxypropyl, Methoxyäthyl, Aethoxyäthyl, Benzyl, Phenyläthyl, Carboxymethyl, $\alpha$ oder $\beta$-Carboxyäthyl, Carboxypropyl, Carboxybutyl, Sulfoäthyl, Sulfopropyl, Sulfobutyl, p-Sulfobenzyl, Carbomethoxymethyl, Carbomethoxyäthyl, Carbäthoxymethyl oder Carbäthoxyäthyl.

Die heterocyclischen Ringsysteme ($Y_1$ und $Y_2$), die gleich oder voneinander verschieden sein können, enthalten gegebenenfalls als Substituenten Alkyl oder Alkoxy mit 1 bis 4 Kohlenstoffatomen, insbesondere Methyl oder Methoxy, ferner Phenyl, Cyan, Nitro, Sulfo (—$SO_3H$) oder Halogen (F, Cl, Br).

$X^{\ominus}$ ist der Säurerest einer anorganischen oder organischen Säure, insbesondere Chlorid, Bromid, Jodid, Methylsulfat, Aethylsulfat, p-Toluolsulfonat, Benzolsulfonat, Acetat, Propinat, Cyanat oder Perchlorat.

$M^{\oplus}$ kann ein Alkalimetall- oder Erdalkalimetallkation sein wie z.B. $Li^{\oplus}$, $Na^{\oplus}$, $K^{\oplus}$ oder $Ca^{2\oplus}$.

Die Verbindungen der Formel (1) und (2) sind beispielsweise in der US—PS 3 354 170 beschrieben.

Eine weitere bevorzugte Klasse von Cyaninen sind die Merocyanine der Formel

(3) 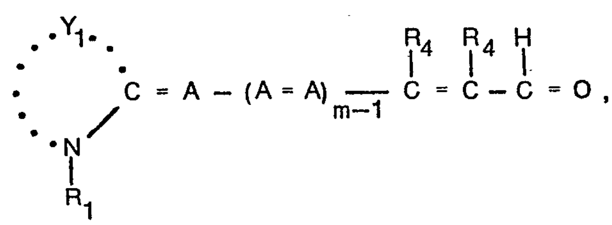

worin A, $R_1$, $Y_1$ und m die angegebenen Bedeutungen haben und $R_4$ Wasserstoff, Alkyl mit 1 bis 4

Kohlenstoffatomen, insbesondere Methyl oder Aethyl, und ferner Phenyl sowie Nitro ist.

Geeignet sind auch trinukleare Cyanine der Formel

(4) 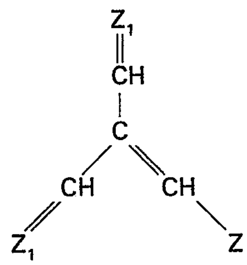 ⊕ $X_1^{\ominus}$ oder $\frac{Y^{2\ominus}}{2}$

(5) 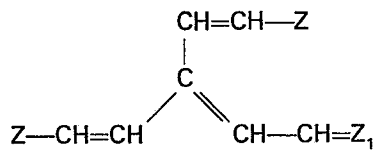 2 ⊕ $2X^{\ominus}$ oder $Y^{2\ominus}$

(6) 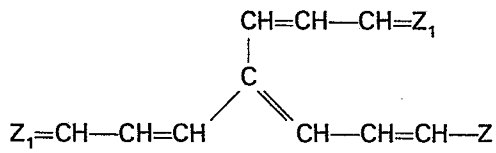 ⊕ $X^{\ominus}$ oder $\frac{Y^{2\ominus}}{2}$

worin $Z_1$ ein mono- oder polycyclischer heterocyclischer Rest ist, der durch eine Doppelbindung an die benachbarte Methingruppe gebunden ist, Z ein zu $Z_1$ mesomerer Rest, der durch Einfachbindung an die benachbarte Methingruppe gebunden ist, $X_1^{\ominus}$ ein einwertiges und $Y^{2\ominus}$ ein zweiwertiges Anion ist.

Geeignet sind ferner auch trinukleare Cyanine der Formeln

(7) 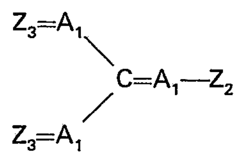

oder

(8) 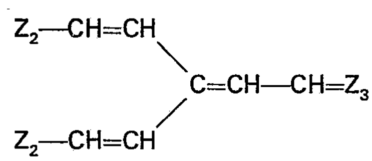

worin $A_1$ = CH— oder =CH—CH=CH—, $Z_2$ ein am Stickstoffatom einfach positiv geladener, stickstoffheterocyclischer Rest, $Z_3$ ein zu $Z_2$ mesomerer, am Stickstoffatom ungeladener Rest, wobei mindestens einer der Reste $Z_2$ eine betainartige Struktur enthält, und die Cyaninfarbstoffe der Formeln (7) und (8) entsprechend der Summe der Ladungen neutral oder positiv oder negativ geladen sein können und in den beiden letzteren Fällen ein entsprechendes Gegenion enthalten.

Als mono- oder polycyclische heterocyclische Reste Z sind z.B. bevorzugt die Reste der folgenden Formeln geeignet, worin $R_5$ und $R_6$ gegebenenfalls substituiertes Alkyl vorzugsweise mit 1 bis 20, insbesondere mit 1 bis 4 Kohlenstoffatomen oder gegebenenfalls substituiertes Aryl, insbesondere Phenyl ist.

Als Substituenten am Alkylrest können z.B. Halogen, Hydroxyl, Cyan, $—SO_3^{\ominus}$ oder $—COO^{\ominus}$ und als Substituenten am Phenyl neben den genannten auch Alkyl, Hydroxyalkyl, Halogenalkyl mit je 1 bis 4 Kohlenstoffatomen sowie ferner $—NH_2$, $—CONH_2$, $—SO_2NH_2$ infrage kommen, wobei die beiden letzteren am Stickstoffatom auch mit Alkyl($C_1$—$C_4$) substituiert sein können:

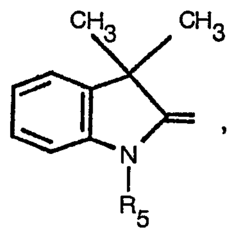 , insbesondere 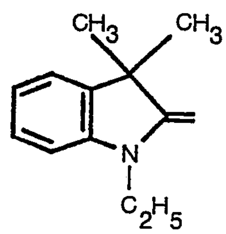 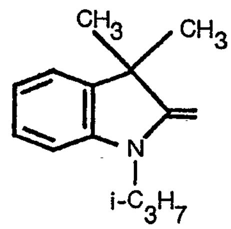

oder 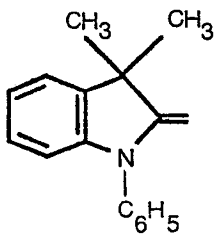 ;

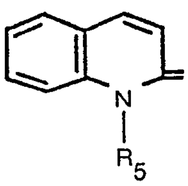 insbesondere 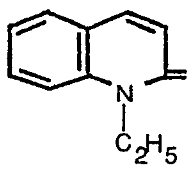 oder 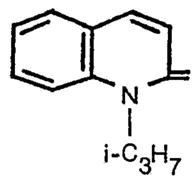 ;

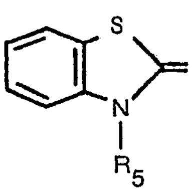 insbesondere 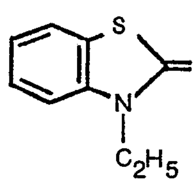 oder 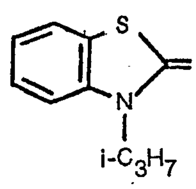 ;

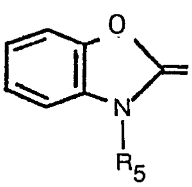 insbesondere 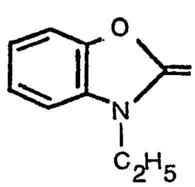 oder 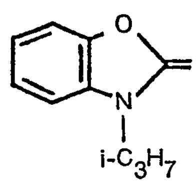 ;

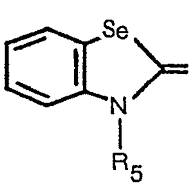 insbesondere 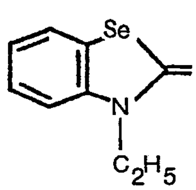 oder 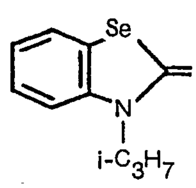 ;

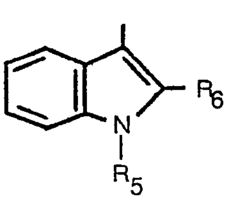 insbesondere 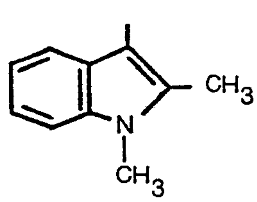 ; 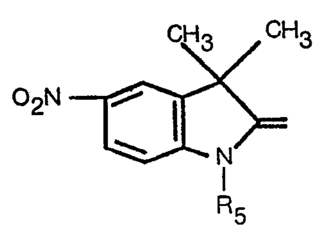 ;

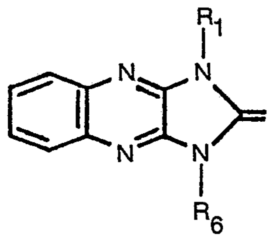 insbesondere 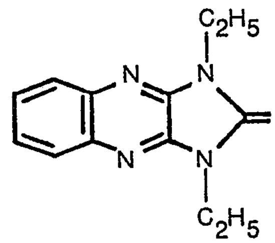 ;

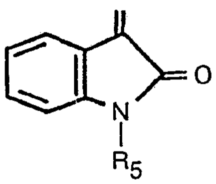 insbesondere 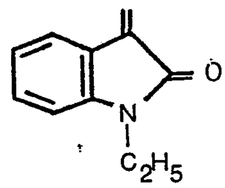 ; 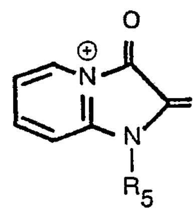

insbesondere 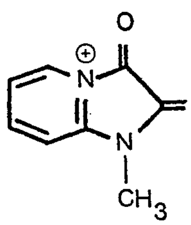 ; ferner 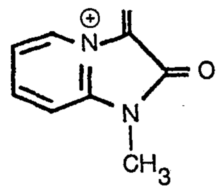

weitere geeignete Heterocyclen entsprechen den folgenden Formeln:

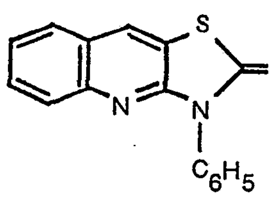 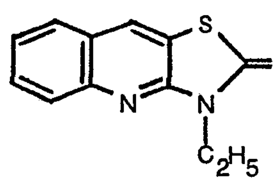 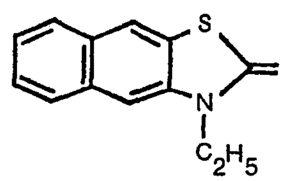

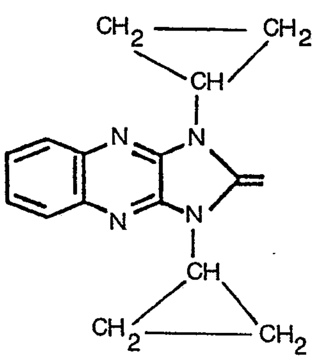 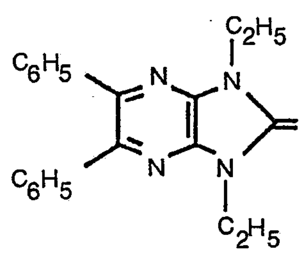 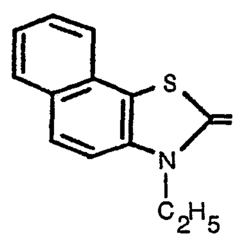

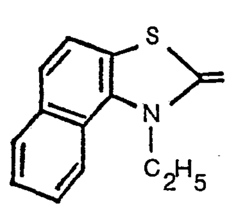 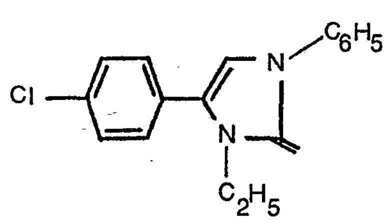 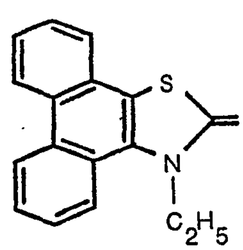

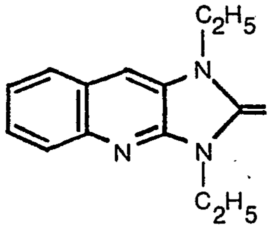
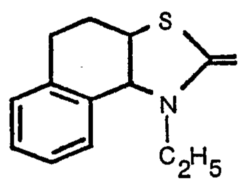
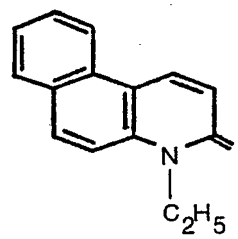

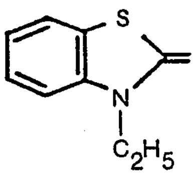
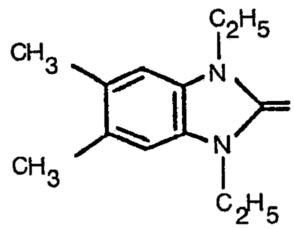
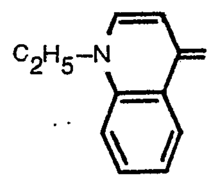

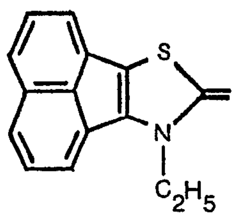
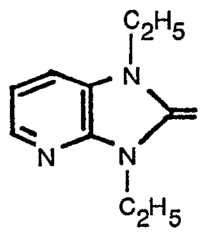
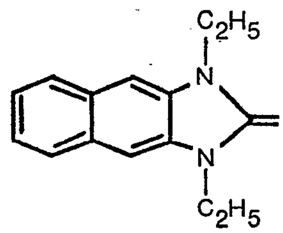

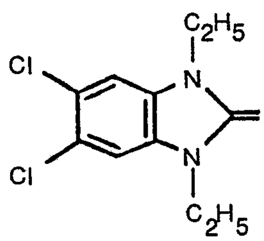
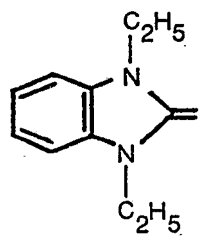
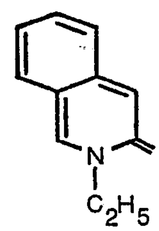

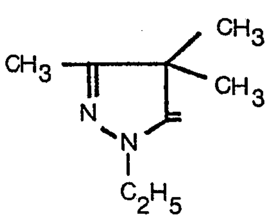
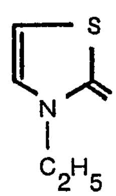
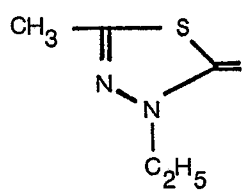
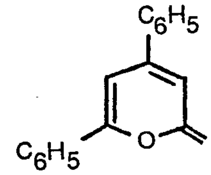

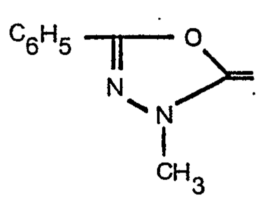
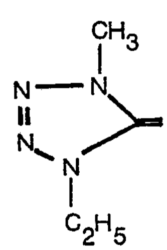
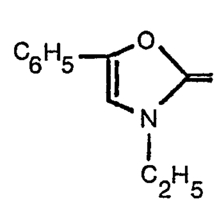
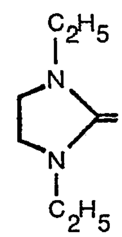

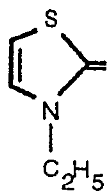 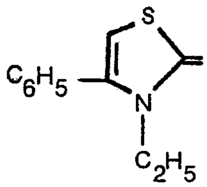 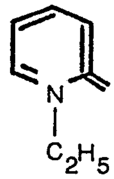 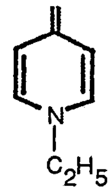 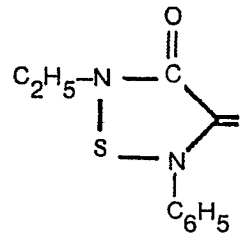

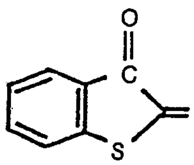 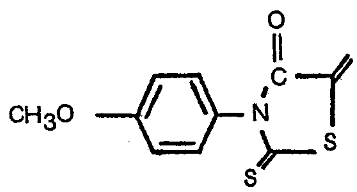 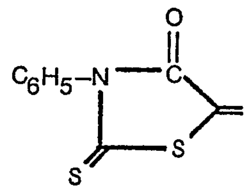

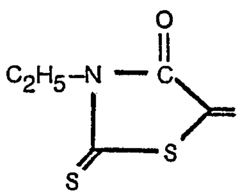 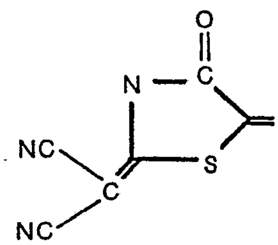 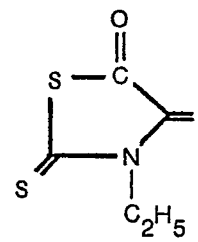

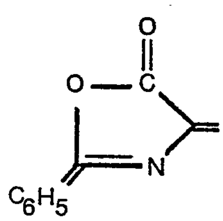 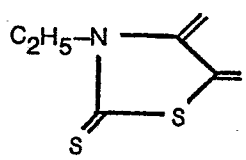 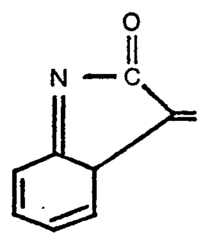

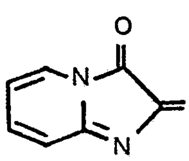 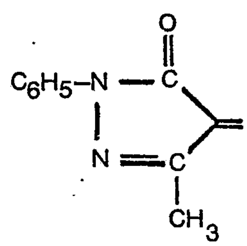 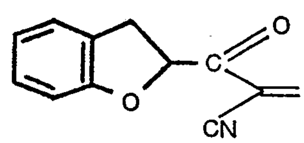

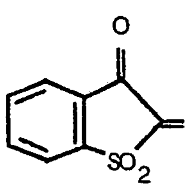 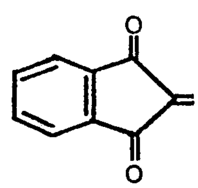 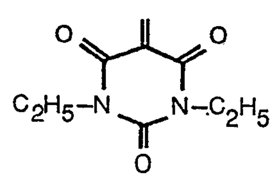

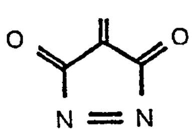 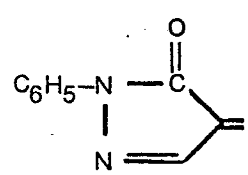 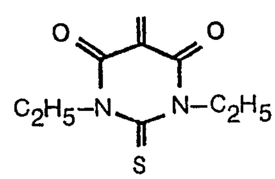

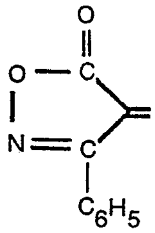
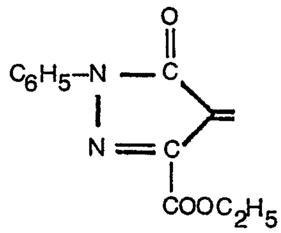
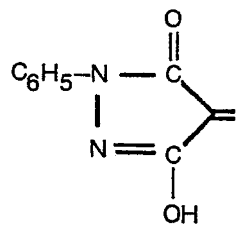
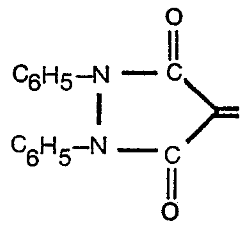

Die für die Herstellung von Cyaninfarbstoffen geeigneten Heterocylen sind z.B. aus D. M. Sturmer, Syntheses and Properties of Cyanic and related Dyes in Chemistry of Heterocyclic Compounds, Vol. 30, (1977), herausgegeben von A. Weissberger und E. C. Taylor bekannt.

Als einwertige $X_1^{\ominus}$ bzw. zweiwertige $Y^{2\ominus}$ Anionen in den Verbindungen der Formel (1) kommen insbesondere die Halogenide, wie Chlorid, Bromid oder Jodid, ferner Nitrat, Tetrafluorborat, Perchlorat, Rhodamid und p-Toluolsulfonat, sowie Sulfat in Betracht und als Kationen $M^{\oplus}$ in den Verbindungen der Formel (2) Alkalimetall- und Erdalkalimetallkationen wie z.B. $Li^{\oplus}$, $Na^{\oplus}$, $K^{\oplus}$ und $Ca^{2\oplus}$.

Synthese und Eigenschaften von trinuklearen Cyaninfarbstoffen sind beschrieben in C. Reichhardt und W. Mormann, Chem. Ber. 105, 1815 (1972); C. Reichhardt und K. Halbritter, Chem. Ber. 104, 822 (1971); F. Baer und H. Oehling, Org. Magnet. Resonance 6, 421 (1974); C. Reichhardt, Tetrahedrom Letters 1967, 4327.

Trinukleare Cyaninfarbstoffe gemäss der vorliegenden Erfindung sind ferner in der amerikanischen Patentschrift 2 282 115 sowie in den englischen Patentschriften 549 203 und 549 204 beschrieben.

Nachfolgend werden einige für das erfindungsgemässe Verfahren und die erfindungsgemässen Anwendungen besonders geeignete Cyaninfarbstoffe aufgeführt.

($E_{red}$ = Reduktionspotential, $E_{ox}$ = Oxydationspotential für den Einelektronenschritt in Volt, gegen die Normalwasserstoffelektrode; $pK_a$ = negativer Logarithmus der Protonierungsgleichgewichtskonstante; $\lambda$ = Absorptionsmaximum). (R. F. Lange in Phot. Sensitivity, Seite 241, ff., R. J. Cox, Butterworth, London 1973; Phot. Science Engineering 18,197 (1974)).

(9) 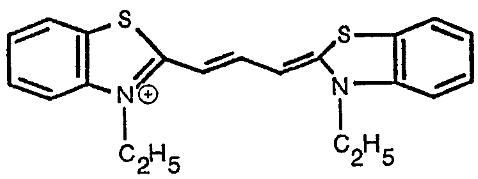 $J^{\ominus}$

$pK_a = +\ 0.4$

$E_{red} = -\ 1.00$

$\lambda_{CH_3OH} = 557$ nm

(10) 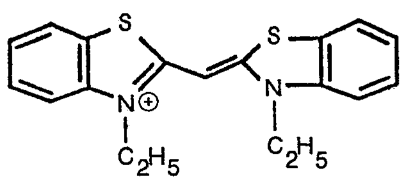 $J^{\ominus}$

$pK_a = -\ 3.0$

$E_{red} = -\ 1.18$

$\lambda_{CH_3OH} = 422$ nm

(11) 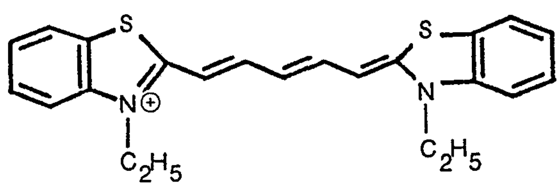 $J^{\ominus}$

$pK_a = +\ 2.0$

$E_{red} = -\ 0.63$

$\lambda_{CH_3OH} = 650$ nm

(12) 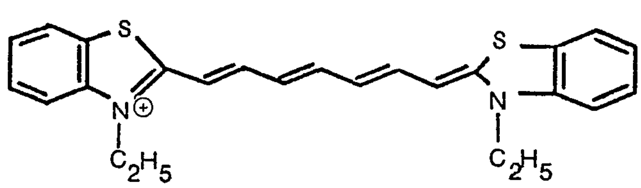 $J^{\ominus}$

$pK_a' = +\ 3.7$

$E_{red} = -\ 0.52$

$\lambda_{CH_3OH} = 762$ nm

(13)

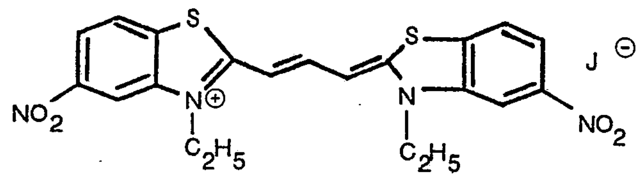

$J^{\ominus}$

$pK_a = -2.43$

$E_{red} \approx -0.4$

$\lambda_{CH_3OH} = 559$ nm

(14)

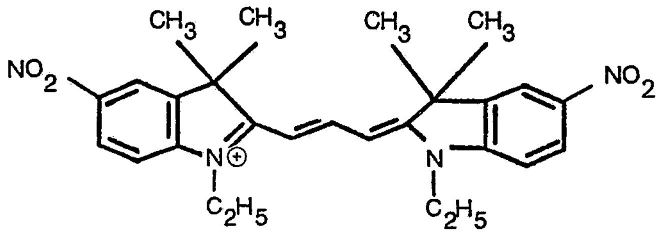

$Br^{\ominus}$

$pK_a = -6.0$

$E_{red} = -0.4$

$\lambda_{CH_3OH} = 567$ nm

(15)

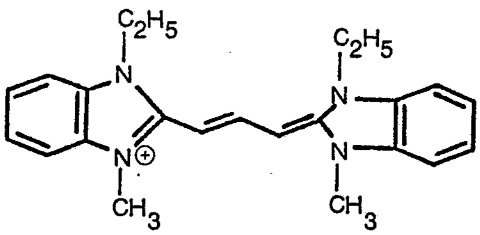

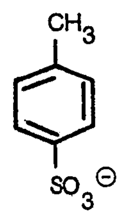

$pK_a = +9.5$

$E_{red} = -1.54$

$\lambda_{CH_3OH} = 500$ nm

$E_{ox} = +0.57$

(16)

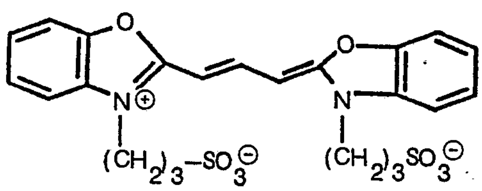

$Na^{\oplus}$

$pK_a = -0.95$

$E_{red} = -1.06$

$\lambda_{CH_3OH} = 481$ nm

(17)

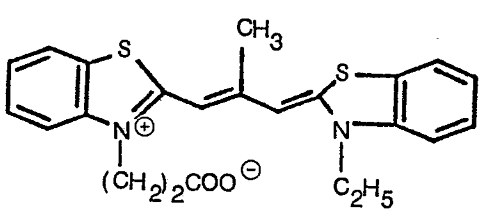

$pK_a = 1.49$

$E_{red} = -0.93$

$\lambda_{CH_3OH} = 546$ nm

(18)

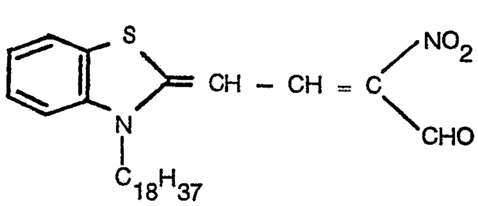

$pK_a < -2$

$E_{red} \simeq -0.3$

$\lambda_{CH_3OH} = 492$ nm

(19)

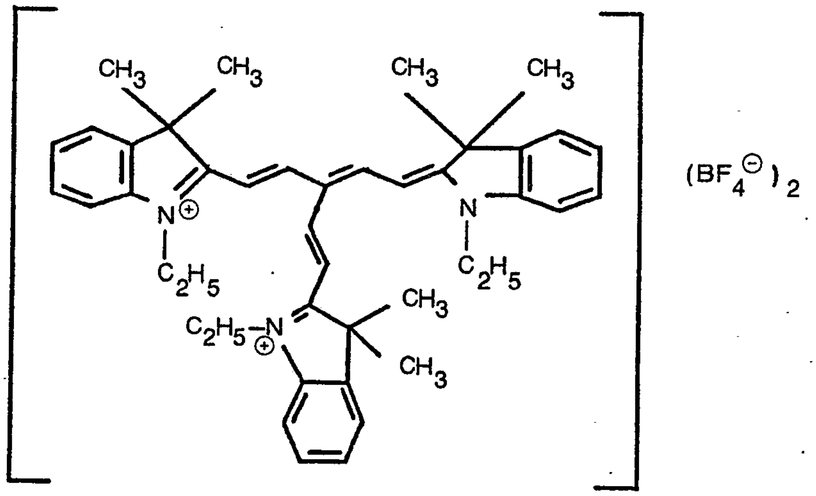

$pK_a \simeq -2.0$

$E_{red} = -0.35$

$\lambda_{CH_3OH} = 635$ nm

$E_{ox} = +1.15$

(20)

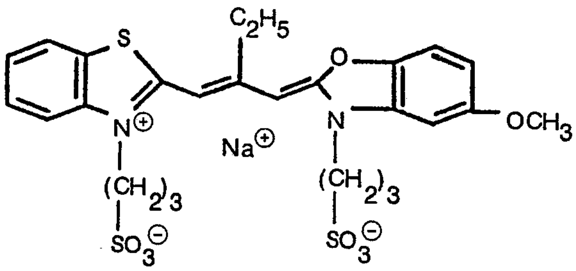

$pK_a \simeq 0$

$E_{red} = -0.95$

$\lambda_{CH_3OH} = 528$ nm

(21)

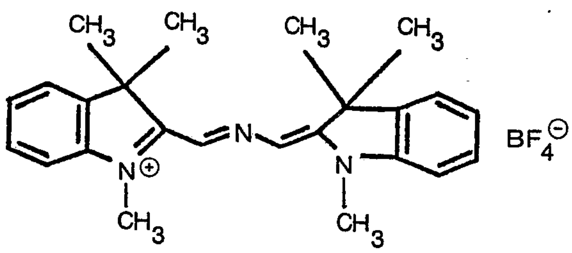

$pK_a \approx -2.1$

$E_{red} = -0.10$

$\lambda_{CH_3OH} = 590$ nm

(22)

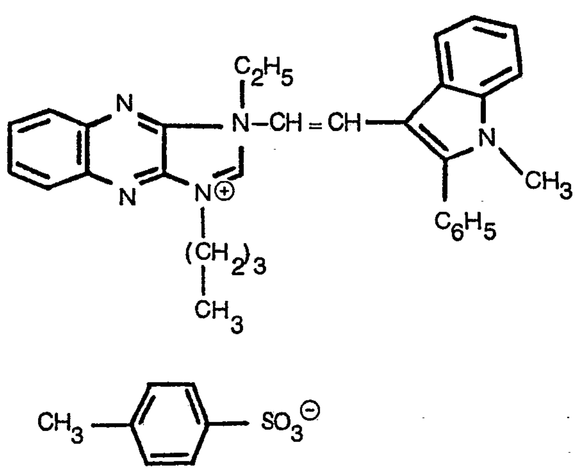

$pK_a < 0$

$E_{red} = -0.5$

$\lambda_{CH_3OH} = 555$ nm

$E_{ox} \cong +1.5$

(23)

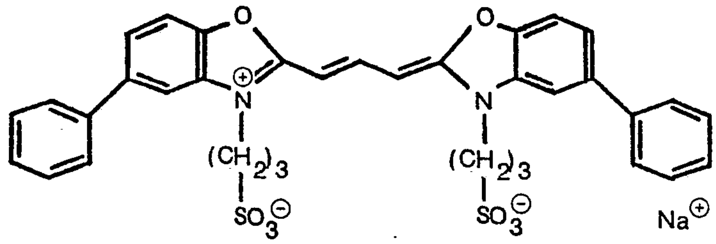

$pK_a \approx -1$

$\lambda_{CH_3OH} = 510$

(24)

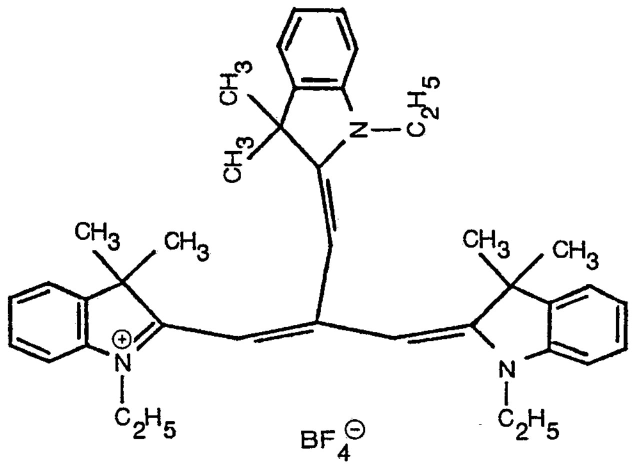

(25)

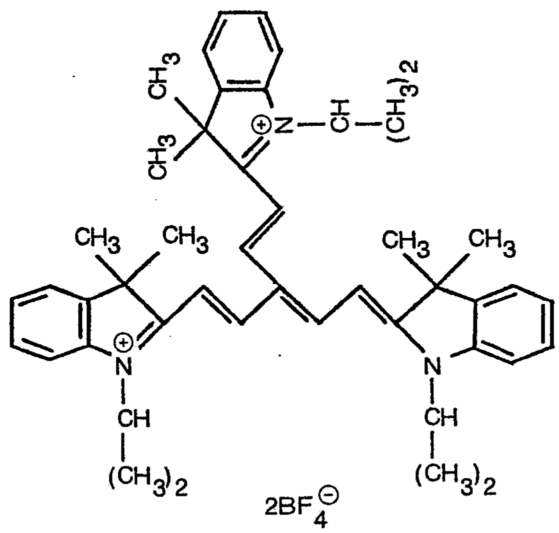

(26)

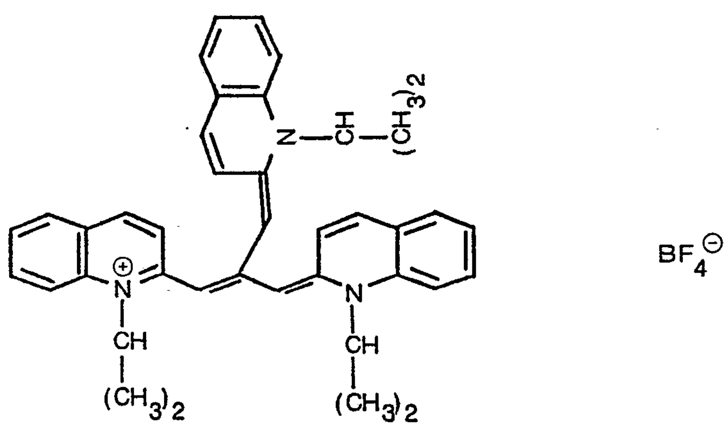

(27)

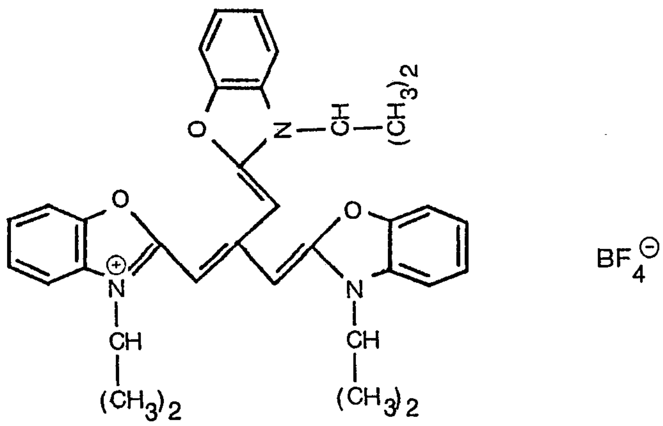

Die Tenside, die zur Micellbildung geeignet sind, können nichtionisch, anionisch, kationisch, zwitterionisch oder amphoter sein; es kann sich um monomere oder polymere Verbindungen (nichtionische Polymere, kationische und anionische Polyelektrolyte, Polyseifen) hendeln. Auch tensidische Kronenätherkomplexe von Uebergangsmetallkationen, welche mit langkettigen Alkylketten substituiert sind, können Micellen bilden. Die Tenside sind bekannt, z.B. aus Speel and Schwarz, Textile Chemicals and Auxiliaries, 301 ff (1957); H. Rath, Lehrbuch der Textilchemie, 2. Auflage, 648 ff. (1963); DE—B—1 792 618, 1 936 843 und DE—B—1 287 556.

Als nichtionische Tenside kommen in erster Linie Polyglykolätherderivate von Alkoholen, Fettsäuren, Fettaminen oder Alkylphenolen infrage, die 3 bis 80 Aethylenoxy- und Propylenoxyeinheiten und 8 bis 22 Kohlenstoffatome im Kohlenwasserstoffrest enthalten. Besonders geeignet sind Polyglykolätherderivate, in denen die Zahl der Aethylenglykoläthergruppen 5 bis 25 beträgt und deren Kohlenwasserstoffreste sich von geradkettigen, primären oder verzweigten Alkoholen mit 12 bis 18 Kohlenstoffatomen oder von Alkylphenolen mit 6 bis 14 Kohlenstoffatomen im Alkylteil ableiten. Gegebenenfalls kann man die letztgenannten Polyäthylenglykoläther durch Anlagerung von Propylenoxyd, z.B. 3 bis 25 Mol weiter modifizieren.

Weitere geeignete nichtionische Tenside sind die wasserlöslichen, 20 bis 250 Aethylenglykoläthergruppen und 10 bis 100 Propylenglykoläthergruppen enthaltende Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten. Auch nichtionische Verbindungen von Typ der langkettigen, tertiären Aminoxide, Phosphinoxide und Sulfoxide, die gegebenenfalls auch äthoxyliert sein können, sind verwendbar.

Langkettige tertiäre Aminoxide entsprechen z.B. der Formel

$$(28) \qquad R_7R_8R_9N \rightarrow O,$$

worin $R_7$ Alkyl, Alkenyl oder Monohydroxyalkyl mit 8 bis 18 Kohlenstoffatomen, $R_8$ und $R_9$ je Alkyl oder Monohydroxyalkyl mit 1 bis 3 Kohlenstoffatomen, z.B. Methyl, Aethyl, Propyl, Hydroxyäthyl oder Hydroxypropyl sind. Die Reste $R_7$ können gegebenenfalls auch äthoxyliert sein. Der Pfeil in der Formel ist eine übliche Darstellung einer semipolaren Bindung. Beispiele von Aminoxiden sind:

Dimethyldodecylaminoxid, Oleyldi-(2-hydroxyäthyl)-aminoxid, Dimethyloctylaminoxid, Dimethyldecylaminoxid, Dimethyltetradecylaminoxid, 3,6,9-Trioxaheptadecyldiäthylaminoxid, Di-(2-hydroxyäthyl)-tetradecylaminoxid, 2-Dodecoxyäthyldimethylaminoxid, 3-Dodecoxy-2-hydroxypropyl-di-(3-hydroxypropyl)-aminoxid und Dimethylhexadecylaminoxid.

Langkettige tertiäre Phosphinoxyde entsprechen z.B. der Formel

$$(29) \qquad R_7R_8R_9P \rightarrow O,$$

worin $R_7$, $R_8$ und $R_9$ die angegebenen Bedeutungen haben. Beispiele von Phosphinoxiden sind:

Dodecyldimethylphosphinoxid, Tetradecyldimethylphosphinoxid, Tetradecylmethyläthylphosphinoxid, 3,3,9-Trioxaoctadecyldimethylphosphinoxid, Cetyldimethylphosphinoxid, 3-Dodecoxy-2-hydroxypropyl-di-(2-hydroxyäthyl)-phosphinoxid, Stearyldimethylphosphinoxid, Cetyläthylpropylphosphinoxid, Oleyldiäthylphosphinoxid, Dodecyldiäthylphosphinoxid, Tetradecyldiäthylphosphinoxid, Dodecyldipropylphosphinoxid, Dodecyl-di-(hydroxymethyl)-phosphinoxid, Dodecyl-di-(2-hydroxyäthyl)-phosphinoxid, Tetradecylmethyl-2-hydroxypropylphosphinoxid, Oleyldimethylphosphinoxid und 2-Hydroxydodecyldimethylphosphinoxid.

Geeignete Dialkylsulfoxide enthalten in der Regel eine kurzkettige Alkyl- oder Hydroxyalkyl mit 1 bis etwa 3 Kohlenstoffatomen, vorzugsweise Methyl, und einen Alkyl-, Alkenyl-, Hydroxyalkyl- oder Ketoalkylreste mit 8 bis 20 Kohlenstoffatomen.

Beispiele für solche Sulfoxide sind:

Octadecylmethylsulfoxid, 2-Ketotridecylmethylsulfoxid, Dodecylmethylsulfoxid, Oleyl-3-hydroxypropylsulfoxid, Tetradecylmethylsulfoxid, 3-Methoxytridecylmethylsulfoxid, und 3-Hydroxytridecylmethylsulfoxid.

Als anionische Tenside eignen sich z.B. Seifen von Fettsäuren mit vorzugsweise 8 bis 22 Kohlenstoffatomen. Diese Salze werden durch Verseifung natürlich vorkommender pflanzlicher oder tierischer Fette und Oele, wie z.B. Palmöl, Kokosöl, Rizinusöl, Sojabohnenöl, Talg, Wal- oder Fischöl erhalten. Beispiele geeigneter Seifen sind die Alkalimetall- (Natrium-, Kalium-), Ammonium- und Alkylolammoniumsalze der von den genannten Fetten und Oelen abgeleiteten gesättigten oder ungesättigten Fettsäuren.

Ebenfalls geeignet sind Fettalkoholsulfate und Alkyl- (Alkenyl)-sulfonate, wobei die Fettalkohole (gesättigt oder ungesättigt) und die Alkylreste der Sulfonate 8 bis 22, vorzugsweise 12 bis 18 Kohlenstoffatome enthalten können.

Beispiele sind Laurylsulfat, Tridecylsulfat, Myristylsulfat, Pentadecylsulfat, Cetylsulfat, Heptadecylsulfat, Stearylsulfat und Oleylsulfat; die Kationen in diesen Salzen sind insbesondere Alkalimetallkationen (Natrium, Kalium), Magnesium- Calcium-, Zink- und Cadmiumionen. Alkylsulfonate sind z.B. Capryl-, Caprin- Laurin-, Myristin-, Palmitrin-, Stearin-, Arachin-, Behensulfonat; weitere Tenside sind Alkylbenzolsulfonate mit 4 bis 12 Kohlenstoffatomen im Alkylteil, wobei der Alkylrest geradkettig oder verzweigt sein kann. Beispiele sind Octyl- und Dodecylbenzolsulfonat. Ferner Alkyl($C_4$—$C_{12}$) naphtahlinsulfonate.

Weitere geeignete anionische Tenside sind beispielsweise Alkylenoxydaddukte, wie z.B. saure, Aethergruppen oder vorzugsweise Estergruppen von anorganischen oder organischen Säuren enthaltende Anlagerungsprodukte von Alkylenoxyden, besonders Aethylenoxyd und/oder Propylenoxyd, oder auch Styroloxyd an aliphatische Kohlenwasserstoffreste mit insgesamt mindestens 8 Kohlenstoffatome aufweisende organische Hydroxyl-, Carboxyl-, Amino- oder Amidoverbindungen bzw. Mischungen dieser Stoffe. Diese sauren Aether oder Ester können als freie Sauren oder als Salze z.B. Alkalimetall-, Erdalkalimetall-, Ammonium- oder Aminsalze vorliegen.

Die Herstellung dieser anionischen Tenside erfolgt nach bekannten Methoden, indem man an die genannten organischen Verbindungen mindestens 1 Mol vorzugsweise mehr als 1 Mol z.B. 2 bis 60 Mol Aethylenoxyd oder alternierend in beliebiger Reihenfolge Aethylenoxyd und Propylenoxyd anlagert und anschliessend die Anlagerungsprodukte veräthert bzw. verestert und gegebenenfalls die Aether bzw. die Ester in ihre Salze überführt. Als Grundstoffe kommen höhere Fettalkohole d.h. Alkanole oder Alkenole mit 8 bis 22 Kohlenstoffatomen, cycloaliphatische Alkohole, Phenylphenole, Alkylphenole mit einem oder mehreren Alkylsubstituenten, der bzw. die zusammen mindestens 8 Kohlenstoffatome aufweisen, Fettsäuren mit 8 bis 22 Kohlenstoffatomen, Amine, die aliphatische und/oder cycloaliphatische Kohlenwasserstoffreste von mindestens 8 Kohlenstoffatomen aufweisen, besonders derartige Reste aufweisende Fettamine, Hydroxyalkylamine, Hydroxyalkylamide und Aminoalkylester von Fettsäuren oder Dicarbonsäuren und höher alkylierter Aryloxycarbonsäuren in Betracht.

Vorzugsweise handelt es sich um Verbindungen der Formel

(30) $$R_{10}\!-\!\left[(\underset{Y_1}{CH}\!-\!\underset{Y_2}{CH}\!-\!O)_m\!-\!X_1\right]_q$$

worin $R_{10}$, $R_{11}$—O—, $R_{12}$—CO—O— oder $R_{13}$—N$<$ ,

$R_{11}$ einen aliphatischen Kohlenwasserstoffrest mit 8 bis 22 Kohlenstoffatomen, einen cycloaliphatischen Kohlenwasserstoffrest mit 10 bis 22 Kohlenstoffatomen, o-Phenylphenyl oder Alkylphenyl mit 4 bis 16 Kohlenstoffatomen im Alkylteil, $R_{12}$ einen aliphatischen Kohlenwasserstoffrest mit 7 bis 21 Kohlenstoffatomen, $R_{13}$ einen aliphatischen Kohlenwasserstoffrest mit 12 bis 22, insbesondere 12 bis 18 Kohlenstoffatomen, von $Y_1$ und $Y_2$ eines Wasserstoff, Methyl oder Phenyl und das andere Wasserstoff, $X_1$ den Säurerest einer anorganischen, Sauerstoff enthaltenden Säure oder einer Dicarbonsäure oder den Rest —$CH_2COOH$, m 1 bis 30 und q 1 oder, sofern Q für

$R_{13}$—N$<$ steht, 2,

wobei die 2 Substituenten am Stickstoffatom gleich oder voneinander verschieden sind, bedeuten.

Gut geeignete anionische Tenside dieses Typs entsprechen vorzugsweise der Formel

(31)

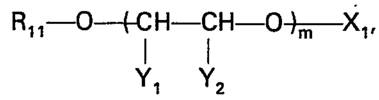

(32)

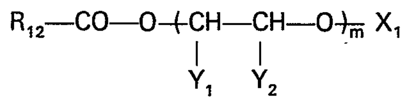

oder

(33)

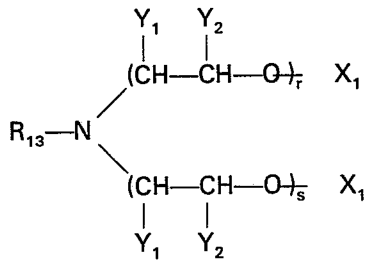

worin $R_{11}$, $R_{12}$, $R_{13}$, $Y_1$, $Y_2$, $X_1$ und m die angegebene Bedeutung haben und r und s ganze Zahlen sind, deren Summe 2 bis 15 beträgt. Anionische Tenside der Formel (31) werden bevorzugt.

Der Rest $R_{11}$—O— kann sich z.B. ableiten von Alkoholen mit vorzugsweise 10 bis 24 Kohlenstoffatomen wie z.B. Decyl-, Lauryl-, Tridecyl-, Myristyl-, Cetyl-, Stearyl-, Oleyl-, Arachidyl-, Behenylalkohol, sowie von Hydroabietylalkohol, den Alfolen oder von o-Phenylphenol oder Alkylphenolen wie z.B. Butyl-, Hexyl-, n-Octyl-, n-Nonyl-, p-tert-Octyl-, p-tert. Nonyl-, Decyl-, Dodecyl-, Tetradecyl- oder Hexadecylphenol.

Bei den Alfolen handelt es sich um lineare primäre Alkohole. Die Nummer hinter den Namen gibt die durchschnittliche Kohlenstoffzahl des Alkohols an. Einige Vertreter dieser Alfole sind Alfol (8—10), (10—14), (12), (16), (18), (20—22).

Der Rest $R_{12}$—COO— leitet sich z.B. ab von Fettsäuren mit 8 bis 22 Kohlenwasserstoffatomen wie z.B. Capryl-, Laurin-, Caprin-, Myristin-, Stearin-, Arachin-, Behen-, Kokosfett-, Decen-, Linol-, Linolen-, Oleyl-, Eikosen-, Dokosen- oder Clupanodonsäure.

$R_{13}$ bedeutet vorzugsweise einen Alkyl- oder Alkenylrest mit 12 bis 22, besonders 16 bis 22 Kohlenstoffatomen. $Y_1$ und $Y_2$ sind vorzugsweise Wasserstoff. Die Summe von r + s ist vorteilhafterweise 6 bis 8. $Y_1$ und $Y_2$ können im gleichen Molekül je verschiedene Bedeutungen haben.

Bedeutet $R_{13}$ Alkyl, so handelt es sich um Reste wie z.B. n-Dodecyl, Myristyl, n-Hexadecyl, n-Heptadecyl, n-Octadecyl, Arachidyl- oder Behenyl. Als Alkenylreste für $R_3$ kommen z.B. Dodecenyl, Hexadecenyl, Oleyl oder Octadecenyl in Betracht.

Die aliphatischen Amine, die als Ausgangsstoffe für die Herstellung der bevorzugten Anlagerungsprodukte der Formel (31) benötigt werden, können gesättigte oder ungesättigte, verzweigte oder unverzweigte Kohlenwasserstoffreste aufweisen. Diese Kohlenwasserstoffreste enthalten vorzugsweise 16 bis 22 Kohlenstoffatome. Die Amine können chemisch einheitlich sein oder in Form von Gemischen in Betracht kommen. Als Amingemische werden vorzugsweise solche herangezogen, wie sie bie der Ueberführung von natürlichen Fetten oder Oelen z.B. Talgfett, Sojaöl oder Kokosöl in die entsprechenden Amine entstehen. Als Amine seien im einzelnen Dodecylamin, Hexadecylamin, Heptadecylamin, Octadecylamin, Talgfettamin, Arachidylamin, Behenylamin und Octadecenylamin (Oleylamin) genannt.

An die Amine kann Aethylenoxid oder zur Einführung der Methyl- oder Phenylgruppe in die Aethylenoxygruppen auch Propylenoxid und/oder Styroloxid angelagert werden. Propylenoxid wird vorzugsweise in Gemischen mit Aethylenoxid eingesetzt. Man verwendet zweckmässig je 1 Mol Amin 5 bis 15 Mol Propylenoxid und mindestens 10 Mol Aethylenoxid. Styroloxid wird zweckmässig vor Aethylenoxid angelagert. In diesem Falle werden vorzugsweise je 1 Mol Amin, 1 Mol Styroloxid und 15 bis 30 Mol Aethylenoxid verwendet.

Der Säurerest $X_1$ kann sich von organischen, vorzugsweise aliphatischen Dicarbonsäuren mit 2 bis 6 Kohlenstoffatomen ableiten, wie z.B. Maleinsäure, Malonsäure, Bernsteinsäure oder besonders Sulfonbernsteinsäure oder kann durch Umsetzung mit einer Halogenessigsäure z.B. Chloressigsäure eingeführt werden.

Insbesondere leitet sich $X_1$ jedoch von anorganischen mehrbasischen Sauerstoffsäuren, wie z.B. Orthophosphorsäure oder Schwefelsäure ab.

Der Säurerest $X_1$ liegt vorzugsweise in Salzform, d.h. z.B. als Alkalimetall-, Erdalkalimetall-, Ammonium- oder Aminsalz vor. Beispiele für solche Salze sind Natrium-, Kalium-, Calcium-,

Ammonium-, Trimethylamin-, Aethanolamin-, Diäthanolamin oder Triäthanolaminsalze. Natriumsalze und Ammoniumsalze sind bevorzugt.

Bei den Alkylenoxideinheiten

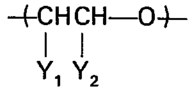

handelt es sich in der Regel um Aethylenoxid- oder 1,2-Propylenoxydeinheiten, letztere befinden sich vorzugsweise im Gemisch mit Aethylenoxideinheiten in den Verbindungen der Formeln (31) bis (33).

Weitere geeignete anionische Tenside sind die Aethylenoxydaddukte von partiellen Fettsäureestern mehrwertiger, z.B. 3- bis 6-wertiger Alkohole.

Die Fettsäurerest können dabei etwa 8 bis 22 Kohlenstoffatome enthalten, während die mehrwertigen Alkohole vorzugsweise 3 bis 6 Kohlenstoffatome enthalten (Glyzerin, Sorbit).

Geeignete kationische Tenside sind in der Regel Ammoniumverbindungen, die mindestens ein quaterniertes Stickstoffatom mit mindestens einem langkettigen, z.B. 8 bis 22 Kohlenstoffatome enthaltenden aliphatischen, insbesondere Alkylrest. Solche Tenside sind z.B. Distearyldimethylammoniumchlorid, Stearyldimethylbenzylammoniumchlorid, Kokosnussalkyldimethylbenzylammoniumchlorid, Dikokosnussalkyldimethylammoniumchlorid, Cetylpyridiniumchlorid und Cetyltrimethylammoniumbromid.

Ferner eignen sich tensidische stickstoffhaltige oder stickstoff- und sauerstoffhaltige Kronenäther, welche einfach- oder zweifach-positiv geladene Uebergangsmetallkationen, besonders $Cu^{2\oplus}$, enthalten. Die tensidischen Kronenäther enthalten in der Regel aliphatische, insbesondere Alkylreste mit z.B. 8 bis 24, insbesondere 12 bis 18, Kohlenstoffatomen. Beispiele für die genannten cyclischen Aether sind 2-Tetradecyl-1,4,10,13-tetraoxa-7,16-diazacyclooctadecan und 2-Tetradecyl-1,4,7,10-tetraaza-cyclodecan. Sie sind beschrieben von J. M. Lehn, J. P. Sauvage und B. Dietrich in J. Am. Chem. Soc. 92, 2916 (1970). Geeignet sind auch nichttensidische Kronenätherkomplexe in Kombination mit Tensiden. Ein Beispiel eines cyclischen Aethers ist 1,4,7,10-tetraaza-cyclodecan, welches z.B. mit Natriumlaurylsulfat als Tensid kombiniert werden kann.

Zwitterionische Tenside können z.B. durch die Formel

(34) 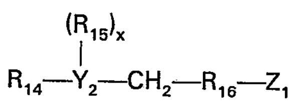

dargestellt werden, worin $R_{14}$ Alkyl-, Alkenyl- oder Hydroxyalkyl mit 8 bis 22 Kohlenstoffatomen, $Y_2$ Stickstoff, Phosphor oder Schwefel, $R_{15}$ Alkyl oder Monohydroxyalkyl mit 1 bis 3 Kohlenstoffatomen, $x = 1$, falls $Y_2$ ein Schwefelatom ist und $x = 2$, falls Y ein Stickstoff- oder Phosphoratom, $R_{16}$ Alkylen oder Hydroxyalken mit 1 bis 4 Kohlenstoffatomen und $Z_1$ eine Carboxylat-, Sulfonat-, Sulfat-, Phosphonat- und Phosphatgruppe ist.

Beispiele für solche Tenside sind:

4-[N,N-Di-(2-hydroxyäthyl)-N-octadecyl-ammonium]-butan-1-carboxylat,
5-[S-3-Hydroxypropyl-S-hexadecylsulfonium]-3-hydroxypentan-1-sulfat,
3-[N,N-Dipropyl-N-3-dodecoxy-2-hydroxypropylammonium]-propan-1-phosphonat,
3-(N,N-Dimethyl-N-hexadecylammonium)-propan-1-sulfonat,
3-(N,N-Dimethyl-N-hexadecylammonium)-2-hydroxypropan-1-sulfonat,
4-[N,N-Di-(2-hydroxyäthyl)-N-(2-hydroxydodecyl)-ammonium]-butan-1-carboxylat.

Geeignete amphotere Tenside sind z.B. Derivate aliphatischer sekundärer und tertiärer Amine, die mindestens einen langkettigen aliphatischen Substituenten (Alkylsubstituenten) mit 8 bis 22 Kohlenstoffatomen und eine anionische, wasserlöslichmachende Gruppe aufweisen (Carboxyl, Sulfat, Sulfonat, Phosphat).

Beispiele für amphotere Tenside sind Alkyl-β-iminodipropionate, $R_{17}N(C_2H_4COOM)_2$; Alkyl-β-aminopropionate, $R_{17}N(H)C_2H_4COOM$ und langkettige Imidazolinderivate der allgemeinen Formel

(35) 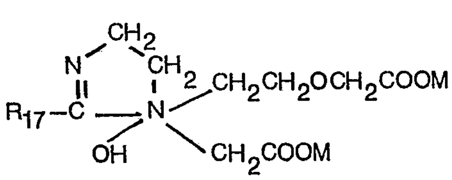

In jeder der obigen Formeln bedeutet $R_{17}$ eine hydrophobe Gruppe, z.B. Alkyl, die 8 bis 22 Kohlenstoffatome aufweist, und M ein Kation zur Neutralisation der Ladung des Anions, z.B. ein Alkalimetallkation wie das Natrium- und Kaliumkation, das Ammoniumkation oder substituierte Ammoniumkationen.

Eine weitere Gruppe geeigneter Tenside, die in der Regel neutral, kationisch oder anionisch sind,

sind die sogenannten Polyseifen, die an einem Polymergerüst, z.B. Polyäthylen oder Polyvinylalkohol langkettige ($C_8$—$C_{22}$) Seitenketten oder heterocyclische Ringsysteme enthalten, die an den Enden bzw. im Ring positiv geladen (z.B. quaternierte Stickstoffatome wie im N-dodecyl-4-polyvinylpyridinium-bromid, Ammoniumverbindungen) oder negativ geladene (z.B. $—COO^{\ominus}$ oder $—SO_3^{\ominus}$ oder $—COO^{\oplus}$ und $—SO_3^{\oplus}$ wie in

$$CH_3—(CH_2)_x—\underset{\displaystyle SO_3^{\ominus}Na^{\oplus}}{\underset{|}{CH}}—(CH_2)_yCOO^{\ominus}Na^{\oplus}$$

mit $x + y = 11$) Gruppen enthalten. Ferner wird auf die Bisquaternären Ammoniumsalze von Polymeren (z.B. Polyvinylalkohol) der US-Patentschrift 3 309 376 verwiesen.

Die Cyaninfarbstoffe können z.B. in die micelläre Form gebracht werden, indem man sie in beliebigen Konzentrationen (grössere, gleiche oder kleinere Konzentrationen im Vergleich zur Micellkonzentration der Tenside) mit den tensidhaltigen Lösungen in der Regel bei Raumtemperatur vermischt und darin auflöst. Die kritische Micellkonzentration (die überschritten werden muss, um Micellen zu bilden) hängt zwar von der Struktur des jeweiligen Tensids, des Lösungsmittels und der Temperatur ab, doch kann man für Tenside (anionische, nichtionische, kationische) in wässrigem Medium eine Konzentration von etwa $10^{-2}$ bis $10^{-6}$ Mol/l annehmen.

Für langkettige Fettalkylsulfate kann man in Abhängigkeit von der Kohlenstoffzahl des Fettrestes folgende kritische Micellkonzentrationen angeben.

| Kohlenstoffzahl | kritische Micellkonzentration |
|---|---|
| 12 | $10^{-2}$ Mol/l |
| 16 | $10^{-3}$ Mol/l |
| 20 | $10^{-4}$ Mol/l |

Für nichtionische Tenside, z.B. Polyäthylenoxydaddukte, kann in wässrigem Medium eine kritische Micellkonzentration von etwa $10^{-4}$ Mol/l angenommen werden.

Die Konzentration der Cyaninfarbstoffe, die in die Micellen aufgenommen werden kann, kann bis zu etwa 10 mal grösser (auf molarer Basis) aber auch bis zu etwa $10^{-6}$ mal kleiner sein als die Micellkonzentration. Die Konzentrationen liegen also etwa im Bereich von $10^{-2}$ bis $10^{-8}$ Mol/l, vorzugsweise bis $10^{-6}$ Mol/l.

Die micellierten Cyaninfarbstoffe können in verschiedenen photographischen Materialien und Verfahren sowie in Farbstofflasern eingesetzt werden.

Die hervorragende Lichtstabilität der micellierten Cyaninfarbstoffe ermöglicht neben der deutlich verbesserten Fluoreszenzpolarisation und Fluoreszenzquantenausbeute einen Einsatz als flüssige Farbstofflaser. Der Vorteil von flüssigen Lasern, die Cyaninfarbstoffe enthalten, liegt darin gegründet, dass sie eine Anregungsemission, d.h. die Aussendung kohärenten Lichts, über ein breiten Bereich des elektromagnetischen Spektrums zu bewirken vermögen.

Ferner sind sie selektiv abstimmbar, d.h. sie können durch Zwischenschaltung eines Bewegungsgitters oder Prismas in solcher Weise abgestimmt werden, dass sie bei innerhalb praktisch der gesamten Fluoreszenzbande des Farbstoffs gelegenen Wellenlängen emittieren.

Die Laserwirkung beruht bekanntlich auf dem Phänomen, das angeregte Atome oder Moleküle ein Photon oder Lichtquant auszustrahlen vermögen, wobei dieses Photon oder Lichtquant selbst wiederum die vorzeitige Emission des Photons eines weiteren angeregten Atoms oder Moleküls auszulösen vermag. Dieser Vorgang wird als Anregungsemission bezeichnet.

Die Anregung von Farbstoffen erfolgt nach bekannten Methoden mit Hilfe von Energiequellen, z.B. solchen, die Elektronen aussenden. Zur Anregung flüssiger Lasermedien wird in der Regel eine Bestrahlung verwendet, die als optisches Pumpen bezeichnet wird. Typische geeignete Pump- oder Anregungsquellen sind z.B. Riesenimpulslaser, Xenon- und Argon-Bogenblitzlichtröhren sowie Bogenentladungsröhren, die nur Luft oder andere gasförmige Gemische enthalten.

Während des Betriebs wird das Farbstofflasermedium durch intensive Energiezufuhr auf die höheren angeregten Zustände gepumpt. Uebertrifft die Zahl der in angeregtem Zustand befindlichen Moleküle die im Grundzustand befindlichen Moleküle, so erfolgt ein spontaner emittierender Uebergang der energiereichen Moleküle und das reflektierte Licht wird im optischen Resonator hin- und hergestrahlt. Durch diese stimulierte Resonanzemission werden noch weitere Moleküle in den höheren Energiezustand angeregt. Ist eine der reflektierenden Hohlraumbegrenzungen partiell durchlässig, was in der Regel der Fall ist, so tritt ein Teil der intensiv reflektierten Lichtimpulse an dieser Stelle des Hohlraumresonators in Form der Laser-Lichtimpulse oder des Laserstrahls aus.

Mit den micellierten Cyaninfarbstoffen der vorliegenden Erfindung kann man Farbstofflaser herstellen, die im Vergleich mit bekannten Laserfarbstoffen (US—A—3 288 788, 3 521 187 oder 3 541 470) einen deutlich verbesserten Wirkungsgrad aufweisen.

Eine weitere Anwendung der micellierten (mikroemulgierten) Cyaninfarbstoffe betrifft diejenige im selektiven photographischen Filtern.

Die meisten in der Fotographie verwendeten Filter sind Absorptionsfilter. Ihre Filterwirkung beruht darauf, dass sie eine bestimmte Wellenlänge (Lichtfarbe) durchlassen. Die Durchlassfarbe entspricht dabei der Eigenfarbe des Filters. Abgesehen von einem geringen Anteil an reflektierter Strahlung werden alle nicht durchgelassenen Strahlen vom Filter verschluckt. Ihre Energie heizt das Filter auf. Längere Zeit einwirkende Strahlenbelastung führt dazu, dass die Filterfarbe heller wird — die Filter bleichen aus (thermisch und photochemisch).

Micellierte Cyaninfarbstoffe können als Filterfarbstoffe aufgrund ihrer guten Stabilität die Lebensdauer von photographischen Absorptionsfilter verlängern.

Die grosse Lichtstabilität der micellierten (microemulgierten) Cyaninfarbstoffe ermöglicht es ferner, sie in diese Form als Bildfarbstoffe in Silberfarbbleichmaterialien einzusetzen, sofern sie irreversibel reduktiv spaltbar sind. Die für diesen Zweck geeigneten Cyanine weisen in der Regel ein niedriges kathodisches Halbwellenpotential auf.

Micellierte Cyaninfarbstoffe, die einen hohen $pK_a$-Wert (>4) aufweisen und irreversibel reduktiv spaltbar sind, können ferner in Silberfarbbleichaufnahme (Film)materialien eingesetzt werden. So kann man z.B. entsprechende photographische Materialien, die in mindestens einer Schicht mindestens einen Cyaninfarbstoff in protonierter(farbloser) Form enthalten bildweise belichten und dann in üblicher Weise im alkalischen Medium entwickeln (wobei sich der Farbstoff als solcher durch Deprotonierung zurückbildet), sowie das Material durch Farb- und Silberbleichung und Fixierung in bekannter Weise fertigstellen (vgl. z.B. DE—A—2 448 433, 2 530 469, 2 547 720).

Da der pH-Wertbereich für übliche photographische Emulsionen etwa 4 bis 9 beträgt, sollten die eingesetzten Cyaninfarbstoffe in diesem Bereich in protonierten Form stabil sein, d.h. möglichst hohe $pK_a$-Werte aufweisen.

Zusätzlich zu den micellierten Cyaninfarbstoffen kann das zuvor beschriebene Silberfarbbleichmaterial auch Cyaninfarbstoffe (die gleichen oder andere) in nicht-micellierter Form als Sensibilisatoren (adsorbiert an Silberhalogenid) in der gleichen oder einer benachbarten Schicht enthalten. Man erreicht so z.B. dass die Lichtabsorption der Farbstoffe und die spektrale Empfindlichkeit der photographischen Emulsionen während der Belichtung in verschiedenen Spektralbereichen liegen und erst bei der anschliessenden Verarbeitung zur Deckung gebracht werden. Durch diese Massnahme kann die Lichtempfindlichkeit eines photographischen Farbmaterials in hohem Masse gesteigert werden.

Eine andere Anwendung des Systems der micellierten (stabilisierten) Cyaninfarbstoffe betrifft das photographische Farbdiffusionsübertragungsverfahren. Arbeitet man z.B. micellierte Tenside in die Farbstoffempfangsschichten ein, so können sie nach der Diffusion der Farbstoffe (bzw. der Farbstoffvorlaüfer) in diese Schichten (und der Farbstoffbildung) die Farbstoffe (Cyaninfarbstoffe) stabilisieren und sie damit als Bildfarbstoffe in photographischen Materialien anwenden. In der Regel enthält die Empfangsschicht noch ein Beizmittel für den Farbstoff.

Für Cyaninfarbstoffe mit einer langen Methinkette (z.B. Undecacyanine), die z.B. aufgrund ihre Absorptionseigenschaften in infrarotempfindliche (photographische) Materialien eingearbeitet werden können, bringt die Stabilisierung in Form von micellierten Species erhebliche Vorteile, da so ihre Licht- und Wärmestabilität bedeutend verbessert werden kann.

Die Einarbeitung der micellierten Cyaninfarbstoffe in Binder (Gelatine)-emulsionen, wie sie in photographischen Materialien üblich sind, erfolgt nach üblichen Methoden, z.B. durch Einrühren der micellierten Cyaninfarbstoffe in Gelatineemulsionen und anschliessende Homogenisierung z.B. durch Ultraschall. Die Menge der micellierten Cyaninfarbstoffe kann etwa 10 bis 200 $mg/m^2$ der Schicht, in die sie eingearbeitet werden, betragen.

Die Emulsionen, die gegebenenfalls Silberchlorid-, Silberbromid und/oder Silberjodid enthalten können chemisch sensibilisiert werden, sie können ferner übliche organische Stabilisatoren und Antischleiermittel sowie auch übliche Weichmacher, wie z.B. Glycerin enthalten. Die Emulsionen können ferner mit den für Gelatine üblichen Härtungsmitteln gehärtet werden. Ferner können die Emulsionen übliche Giesshilfsmittel enthalten. Die Emulsionen können auf übliche Schichtträger für photographisches Aufzeichnungsmaterial aufgebracht werden. Gegebenenfalls kann ein Gemisch von mehreren Kolloiden zum Dispergieren der Silberhalogenide verwendet werden.

Als Silberfarbbleichmaterial kann ein transparentes, metallischreflektierendes, oder vorzugsweise weissopakes Material verwendet werden, dessen Träger keine Flüssigkeit aus den Bädern aufzusaugen vermag.

Der Träger kann beispielsweise aus gegebenenfalls pigmentiertem Cellulosetriacetat oder Polyester bestehen. Wenn er aus Papierfilz besteht, muss dieser beidseitig lackiert oder mit Polyäthylen beschichtet sein. Auf mindestens einer Seite dieses Trägers befinden sich die lichtempfindlichen Schichten, vorzugsweise in der bekannten Anordnung, d.h. zu unterst eine rot sensibilisierte Silberhalogenidemulsionsschicht, die einen blaugrünen Farbstoff enthält, darüber eine grün sensibilisierte Silberhalogenidemulsionsschicht, die einen purpurnen Farbstoff enthält und zu oberst eine blauempfindliche Silberhalogenidemulsionsschicht, die einen gelben Farbstoff enthält. Das Material kann auch Unterschichten, Zwischenschichten, Filterschichten und Schutzschichten enthalten. Insbesondere können auch, wie dies in den Deutschen Offenlegungsschriften 2 036 918, 2 132 835 und 2 132 836

beschrieben wurde, die Silberhalogenidemulsion und der zugeordnete bleichbare Farbstoff in zwei oder drei getrennten, unter sich benachbarten Schichten enthalten sein, doch soll die gesamte Dicke der Schichten im trockenen Zustand in der Regel 20$\mu$m nicht übersteigen.

Die Verarbeitung der belichteten Silberfarbbleichmaterialien erfolgt in üblicher Weise und umfasst (1) die Silberentwicklung, (2) die Farbbleichung, (3) die Silberbleichung und (4) die Fixierung (vg. z.B. DE—A—2 448 443). Die Farbbleichung (2) und die Silberbleichung (3) können in einer einzigen Behandlungsstufe zusammengefasst werden.

Zur Silberentwicklung können Bäder üblicher Zusammensetzung verwendet werden, z.B. solche, die als Entwicklersubstanz Hydrochinon und gewünschtenfalls zusätzlich noch 1-Phenyl-3-pyrazolidinon enthalten. Ausserdem kann es günstig sein, wenn das Silberentwicklungsbad, wie in der Schweizer Patentschrift 405 929 beschrieben, noch zusätzlich einen Farbbleichkatalysator enthält.

Als Farbbleichbäder — sofern die Farbbleichung als getrennte Behandlungsstufe durchgeführt wird — werden mit Vorteil solche verwendet, die neben einer starken Säure, einem wasserlöslichen Jodid und einem Oxydationsschutzmittel für das Jodid einen Farbbleichkatalysator enthalten. Kombinierte Farb- und Silberfarbbleichbäder enthalten neben den angegebenen Komponenten in der Regel noch ein wasserlösliches Oxydationsmittel. Geeignete Farbbleichkatalysatoren sind in erster Linie Diazinverbindungen, z.B. Derivate des Pyrazins, Chinoxalins oder Phenazins. Sie sind z.B. in den DT—B—2 010 280, 2 144 298 und 2 144 297, in der französichen Patentschrift 1 489 460, in der US-Patentschrift 2 270 118, sowie in der DT—A—2 448 443 beschrieben.

Unter starken Säuren sind hier solche zu verstehen, welche dem Farbbleichbad bzw. dem kombinierten Farb- und Silberbleichbad einen pH-Wert von höchstens 2 verleihen. Es können also z.B. Salzsäure, Phosphorsäure und insbesondere Schwefelsäure oder Sulfaminsäure verwendet werden.

Als wasserlösliches Jodid kann man Alkalijodide verwenden, wie beispielsweise Kaliumjodid oder Natriumjodid.

Geeignete Oxidationsmittel sind Nitrosoverbindungen, wie z.B. p-Nitrosodimethylanilin, Nitroverbindungen, wie z.B. aromatische Nitroverbindungen und vorzugsweise aromatische Mono- oder Dinitrobenzolsulfonsäuren, z.B. m-Nitrobenzolsulfonsäure.

Als Oxydationsschutzmittel verwendet man mit Vorteil Reduktone oder wasserlösliche Mercaptoverbindungen. Geeignete Reduktone sind insbesondere aci-Reduktone mit einer 3-Carbonyl-endiol-(1,2)-Gruppierung wie Reduktin, Triose-Redukton oder vorzugsweise Ascorbinsäure.

Als Mercaptoverbindungen kommen solche der Formel $HSA(B)_m$ infrage, worin A ein aliphatisches, cycloaliphatisches, araliphatisches, aromatisches oder heterocyclisches Brückenglied, B einen wasserlöslichmachenden Rest und m eine ganze Zahl von höchstens 4 ist. (DE—A—2 258 076, DE—A—2 423 819).

Das Silberfixierbad kann in bekannter und üblicher Weise zusammengesetzt sein. Als Fixiermittel geeigent ist z.B. Natriumthiosulfat oder mit Vorteil Ammoniumthiosulfat, gewünschtenfalls mit Zusätzen wie Natriumbisulfit, Natriummetabisulfit und/oder Ammoniumbisulfit sowie gegebenenfalls Komplexierungsmittel, wie Aethylendiamintetraessigsäure.

Alle Behandlungsbäder können weitere übliche Zusätze wie z.B. Härtungsmittel, Netzmittel, optische Aufheller oder UV-Schutzmittel enthalten.

In den nachfolgenden Beispielen beziehen sich Teile und Prozente auf das Gewicht, sofern nicht anders angegeben.

## Beispiel 1

5 . $10^{-2}$ Mol Natriumlaurylsulfat werden in Wasser gelöst. 1 . $10^{-5}$ Mol des Cyaninfarbstoffs der Formel

(101)

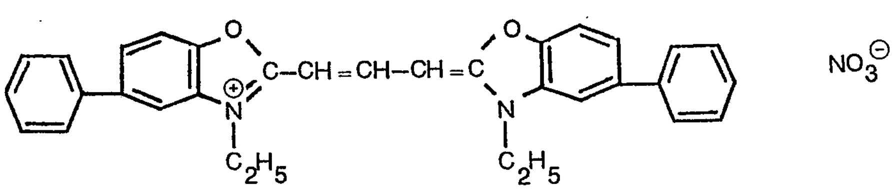

gelöst in Methanol, werden in einen Kolben gegeben; das Lösungsmittel wird dann im Vakuum abdestilliert. Der Farbstoff schlägt sich als dünne Schicht auf der Innenwand des Kolbens nieder. Dann gibt man die wässrige Lösung des Natriumlaurylsulfats in den Kolben und rührt solange bei 30°C bis der Farbstoff sich gelöst hat.

Diese Lösung wird mit einer Xenonlampe (XBO—450 Watt Lampe) bestrahlt, wobei ein Wasserfilter vorgeschaltet wurde, um Lichtanteile im Infrarot und im fernen Ultraviolett herauszufiltern. Nach jeder Stunde wird das Spektrum gemessen. Nach einer Bestrahlungszeit von 24 Stunden konnte keine Veränderung der Absorptionseigenschaften festgestellt werden. Eine wässrige Lösung des Cyaninfarbstoffs (in Abwesenheit von Tensidmicellen) zeigt dagegen nach einstündiger Betrahlung eine völlige Veränderung des Absorptionsspektrums, indem das Absorptionsmaxiumum praktisch verschwunden ist (Zerstörung des Moleküls).

Figur 1 zeit das Absorptions- und Emissionsspektrum einer wässrigen Lösung, die $10^{-6}$ Mol des Cyanins der Formel (10 I) und $10^{-2}$ Mol Natriumlaurylsulfat enthält.

Figur 2 zeigt das Polarisationsspektrum der Fluoreszenz der gleichen Lösung.

Der Polarisationsgrad der Fluoreszenz wird wie folgt definiert:

$$P = \frac{J_2 - J_1}{J_2 + J_1}$$

$J_2$ und $J_1$ sind die Emissionswerte, gemessen hinter parallelen bzw. gekreuzten Polarisatoren.

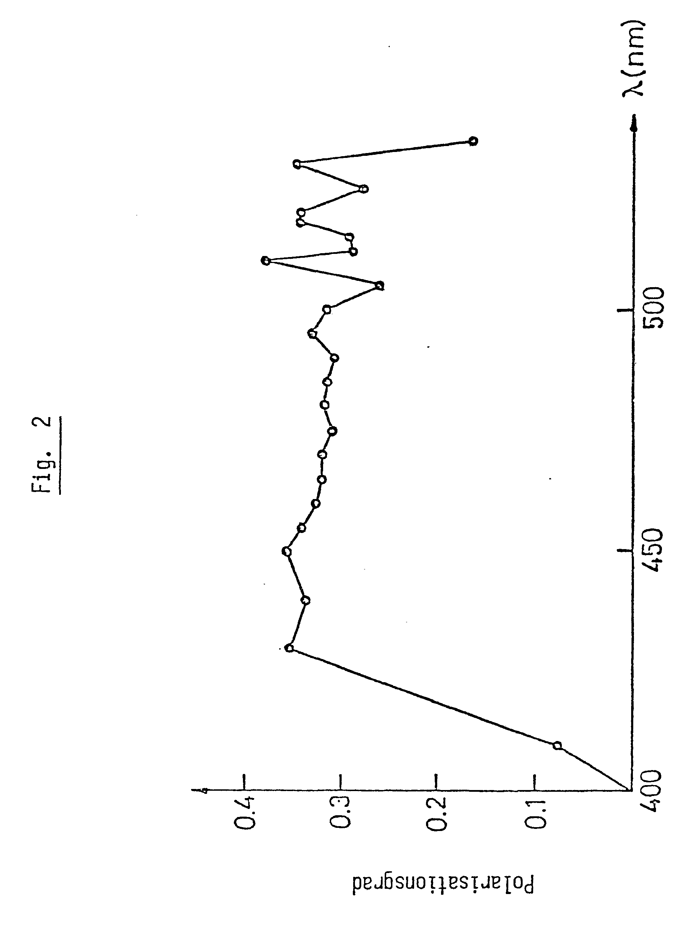

Figur 2 zeigt, dass die Werte für P für den grössten Teil des Spektrums innerhalb der Werte von 0,3 bis 0,4 liegen, was — bei einem oberen theoretischen Grenzwert von 0,5 für P — zeigt, dass während der Anregungszeit (~1 Nanosekunde) praktisch keine Rotationsschwingung des Farbstoffs stattfindet.

Quantenausbeute der Fluoreszenz [$\phi_F$]
(Farbstoff der Formel (101))

TABELLE 1

| Medium | $\phi_F$ | $\lambda_{max}$ [nm] |
|---|---|---|
| Methanol | 0,05 | 510 |
| Natriumlaurylsulfat[1] | 0,45 | 517 |
| Magnesiumlaurylsulfat[1] | 0,54 | 518 |
| Cadmiumlaurylsulfat[1] | 0,7 | 518 |

[1] in wässrigem Medium, Micellen

Analoge Ergebnisse erhält man auch mit den micellierten Cyaninfarbstoffen der nachfolgenden Formeln

(102)

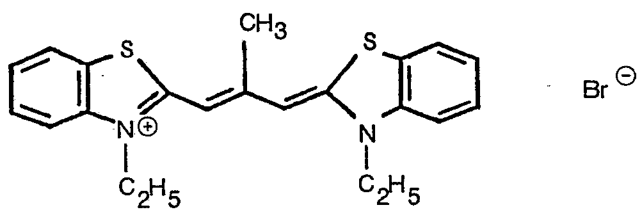

(103)

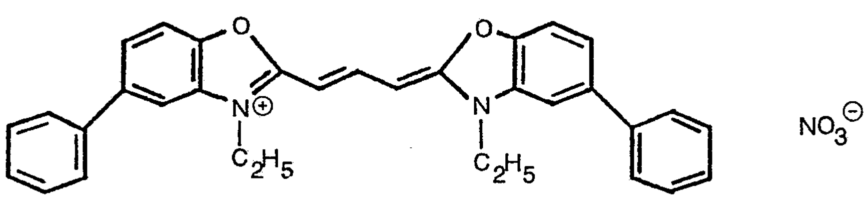

(104)

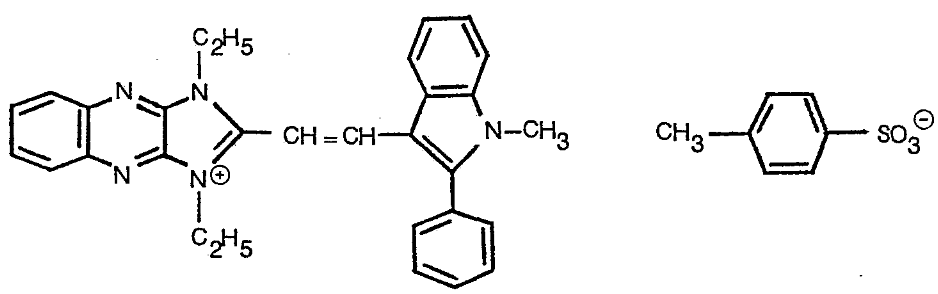

(105)

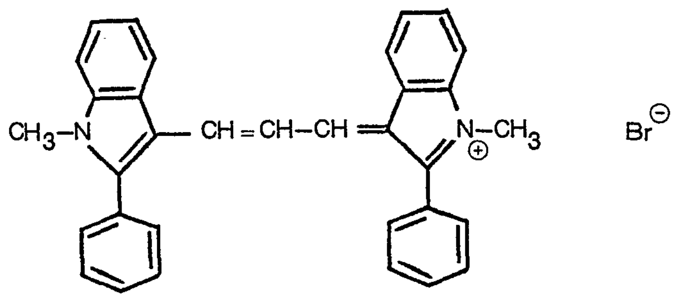

(106)

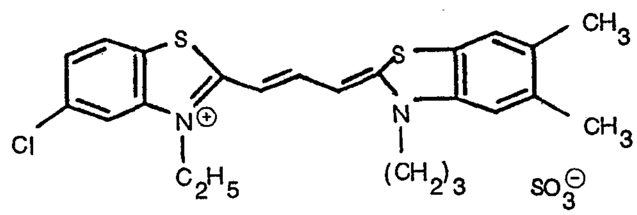

(107)

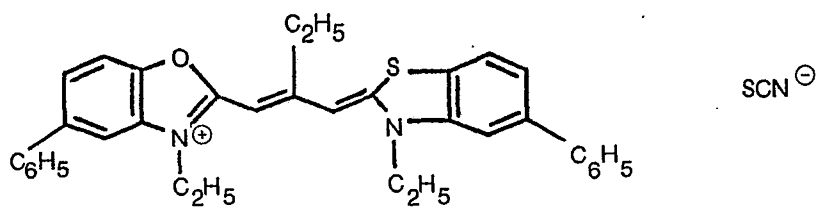

(108)

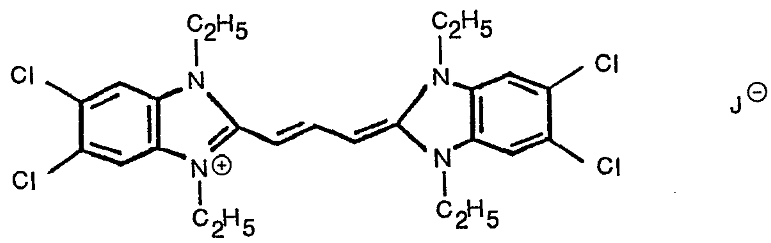

Als weitere Tenside können eingesetzt werden:

Ammoniumsalz des sauren Schwefelsäureesters des Anlagerungsproduktes von 2 Mol Aethylenoxyd und 1 Mol p-tert.Nonylphenol;

Ammoniumsalz des sauren Schwefelsäureesters des Anlagerungsproduktes von 3 Mol Aethylenoxyd und 1 Mol Tridecylalkohol;

Natriumsaltz des sauren Maleinsäureesters des Anlagerungsproduktes von 2 Mol Aethylenoxyd und 1 Mol p-Nonylphenol.

Beispiel 2

Die Lösung des Cyaninfarbstoffs gemäss Beispiel 1 wird einer Laserstrahlung ausgesetzt. Als Anregungsquelle dient der Impuls aus einem 347,1 nm -Frequenz-Doppel-Rubin-laser mit einer Impulsbreite von 25 Nanosekunden (Abfall der Laserintensität auf 1/e nach 25 Nanosekunden) und einer Energie von 300 bis 400 mJoule pro Impuls. Nach der Einstrahlung von 50 bis 100 Impulsen zeigt das Absorptionsspektrum des Cyaninfarbstoffs keine Veränderung. Diese unerwartete Stabilität der in micellärer Form vorliegenden Cyanine ermöglicht eine Verwendung in Farbstofflasern. Man erreicht einen integralen Engergieoutput von etwa 30 mJoule bei einer Halbwertsbreite von 15 Nanosekunden.

Beispiel 3

Anwendung von micellierten Cyaninen in Silberfarbbleichmaterialien.

Eine gehärtete Gelatineschicht, die sich auf einem Cellulosetriazetatträger befindet und 50 $mg/m^2$ des micellierten Cyaninfarbstoffs der Formel

(109)

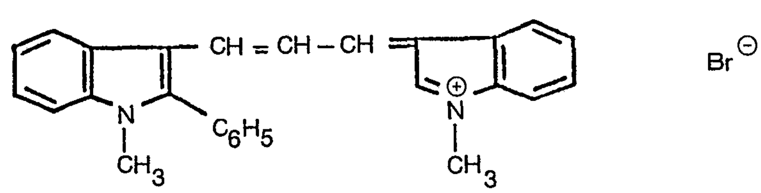

enthält, wird mit einem Aluminiumträger in Kontakt gebracht, auf dem eine Bleichlösung der folgenden Zusammensetzung aufgebracht ist:

| | |
|---|---|
| Pyrazin-2-carbonsäure | 1 g |
| Aethylenglykolmonoäthyläther | 30 g |
| Schwefelsäure (konz.) | 1 g |
| Ammoniumfluorid | 1,8 g |
| Wasser auf | 100 ml |

Nach einer Kontaktzeit von 2 Minuten ist die Farbstoffschicht von einer optischen Dichte $D_{600nm} = 0{,}33$ auf $D_{600nm} = 0{,}04$ gebleicht.

Das gleiche Resultat erhält man eine auf einen Träger aufgebrachte belichtete und entwickelte Silberhalogenidgelatineemulsion verwendet.

Das Beispiel zeigt, dass micellierte Cyanine, sofern sie reduktiv bleichbar sind, als Bildfarbstoffe in Silberfarbbleichmaterialien eingesetzt werden können.

Anstelle des Cyaninfarbstoffs der Formel (109) kann man mit ebenfalls guten Ergebnissen die Cyaninfarbstoffe der Formeln (8), (9), (13), (14) und (16) einsetzen.

Beispiel 4

Man stellt ein photographisches Material dadurch her, dass man die folgenden Schichten nacheinander auf einen 0,1 mm starken, weisspigmentierten Cellulosetriacetätträger giesst.

1. Eine Gelatineschicht, die 0,2 $g\,m^{-2}$ des Farbstoffs der Formel (109) in micellierten (mikroemulgierter) Form (Tensid, Natriumlaurylsulfat) in 4,0 $g\,m^2$ Gelatine enthält.

2. Eine aus mit Phthalsäureanhydrid modifizierter Gelatine bestehende Trennschicht mit einem Gelatineauftragsgewicht von 1,0 $g\,m^{-2}$.

3. Eine lichtempfindliche Silberhalogenid/Gelatineemulsionsschicht, die 1,2 $g\,m^{-2}$ Silber in Form von Silberchloridbromid (70 Mol-% AgCl und 30 Mol-% AgBr) enthält.

4. Eine 1,0 $g\,m^{-2}$ Gelatine enthaltende Oberschicht.

Nach Belichtung hinter einem Graukeil verarbeitet man das Material im Dunkeln, indem man die Emulsionsseite mit einem aluminierten Träger zusammenbringt, auf dem eine Verarbeitungszusammensetzung der folgenden Formel aufgebracht ist.:

| | |
|---|---|
| Pyrazin | 0,2 g |
| Schwefelsäure (5n) | 8,0 ml |
| Calciumfluorid | 0,1 g |
| Hydroxyäthylcellulose (Natrosoltyp 250 HH) | 1,0 g |
| Wasser auf | 100 ml |

Nach fünf Minuten entfernt man den aluminierten Träger. Während dieser Zeit hat die Verarbeitungslösung die mit Phthalsäureanhydrid modifizierte Gelatineschicht aufgeweicht, und beim Abziehen des aluminierten Trägers werden die Silberhalogenidschicht und die Oberschicht damit entfernt, wobei eine blaugrüne Abbildung des vorhandenen Keils auf dem Träger erscheint. Diese Abbildung besitzt eine als fertiges Bild aufreichend dunkle Farbdichte.

Beispiel 5

Ein photographisches Material stellt man dadurch her, dass man die folgenden Schichten nacheinander auf einen 0,1 mm starken, ungefärbten transparenten Cellulosetriacetatträger aufbringt:

1. Eine Gelatineschicht, die denselben micellierten Farbstoff wie in Beispiel 4 enthält.
2. Eine weissreflektierende Schicht.
3. Eine schwarzopak-machende Schicht.
4. Eine Emulsionsschicht wie in Beispiel 4 verwendet.
5. Zinkpulver mit einer schwarzopak-machenden Russschicht.
6. Eine 1,0 $g\,m^{-2}$ Gelatine enthaltende Oberschicht.

Nach Belichtung mit Röntgenstrahlen hinter einem Bleikeil verarbeitet man das Material durch Eintauchen in eine Lösung der folgenden Zusammensetzung:

| | |
|---|---|
| 2-Acetyl-3-methylchinoxalin | 0,3 g |
| Schwefelsäure (5n) | 8,0 ml |
| 1-Phenyl-5-merkaptotetrazol | 0,1 g |
| Wasser auf | 100 ml |

Nach drei Minuten erhält man eine negative blaugrüne Abbildung des Keils, welche man durch den Träger hindurch betrachten kann.

Die in diesem Beispiel verwendete Zinkpulver/opakmachende Schicht wird wie folgt hergestellt: Man stellt eine Dispersion von Zinkpulver in Gelatine nach folgender Formel her:

| | |
|---|---|
| 4%ige Gelatinelösung | 100 ml |
| Natriumalkylnaphthalinsulfonat (10%ige wässrige Lösung) | 1 ml |
| Zinkpulver | 10 g |

Man gibt 20 ml der obigen Dispersion zur wie oben beschriebenen Russdispersion.

Beispiel 6

Verbesserung der Lichtechtheit von Cyaninfarbstoffen mit Hilfe makrocyclischer Quencher.

Eine Lösung von 0,02 Mol Natriumlaurylsulfat (NaLS) in Wasser wird mit 2 . $10^{-3}$ Mol des Kupferkomplexes der Formel

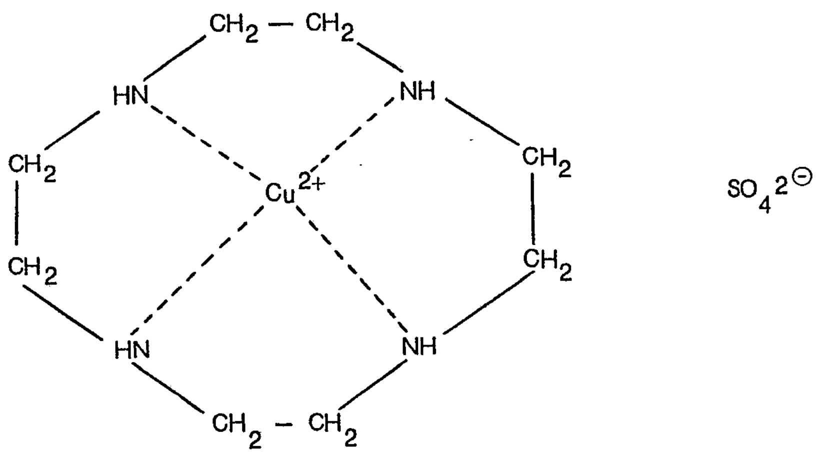

(110)

versetzt. Dieser wird durch Zugabe einer stöchiometrischen Menge von $CuSO_4$ zu einer Lösung des Tetraazakronenäthers (analog obiger Formel) dargestellt. $10^{-6}$ Mold des Cyaninfarbstoffes der Formel (101) werden hinzugefügt. Gemäss Beispiel 1 wird bei 30°C solange gerührt, bis der Farbstoff sich gelöst hat. Die Lösung bestrahlt man mit einer Xe-Lampe (XBO—450 Watt), wobei UV-Lichtanteile herausgefiltert werden. Belichtung über einen Zeitraum von 24 Stunden zeigt keine Bleichung des Farbstoffes (101), während in der quencherfreien Lösung die ursprünglich eingesetzte Farbstoffmenge um 15% abgenommen hat. Mit Fluoreszenzmessungen an Farbstoff (101) können im Vergleich zur reinen NaLS-Lösung geringere Fluoreszenzquantenausbeuten ($\Phi < 10^{-2}$) und kürzere Halbwertszeiten des Moleküls im angeregten Zustand nachgewiesen werden.

Beispiel 7

Verwendung eines weiteren oberflächenaktiven Systems zur Verbesserung der Lichtechtheit des Cyaninfarbstoffes. Bevorzugtes Tensid für diese Untersuchungen ist das Calcium-Monooxyäthylendodecylsulfat $[(C_{12}H_{55}—O—CH_2—CH_2—O—SO_3)_2Ca]$ $(Ca(DOS)_2)$. Dieses bildet Micellen mit einer kritischen Micellenkonzentration von 2 . $10^{-4}$ Mol. Der Kraffts-Punkt liegt bei 15°C. Nach Beispiel 1 wird eine wässrige Lösung mit einem Gehalt von 5 . $10^{-3}$ Mol Ca $[DOS]_2$ und $10^{-6}$ Mol Cyaninfarbstoff der Formel (101) hergestellt. Die Fluoreszenzquantenausbeute beträgt 0,7 und liegt nahe dem für Glycerin ermittelten Wert von 0.8. Die Versuchsergebnisse zeigen, dass keine Zersetzung des Farbstoffes der Formel (101) stattgefunden hat, womit die stabilisierende Wirkung dieser micellären Tensidstruktur auf Cyaninfarbstoffe gezeigt ist.

Beispiel 8

Der Cyaninfarbstoff der Formel (101) wird in der Polyseife N-dodecyl-4-polyvinylpyridinium-bromid (111) micelliert. Zur Synthese und Beschreibung von Verbindung (111) siehe U. P. Strauss, J. Polymer Sci. 9 (No. 6), 509 (1952), T. Kunitake, Biopolymers 15, 1145 (1976) und U. P. Strauss et al., J. Phys. Chem. 58, 747 (1954).

Neben der reinen Verbindung (111) werden auch Tensidkombinationen zur Micellierung des Farbstoffes herangezogen. Sowohl NaLS als auch Verbindung (111) werden zusammen mit dem Kronenätherkomplex der Formel

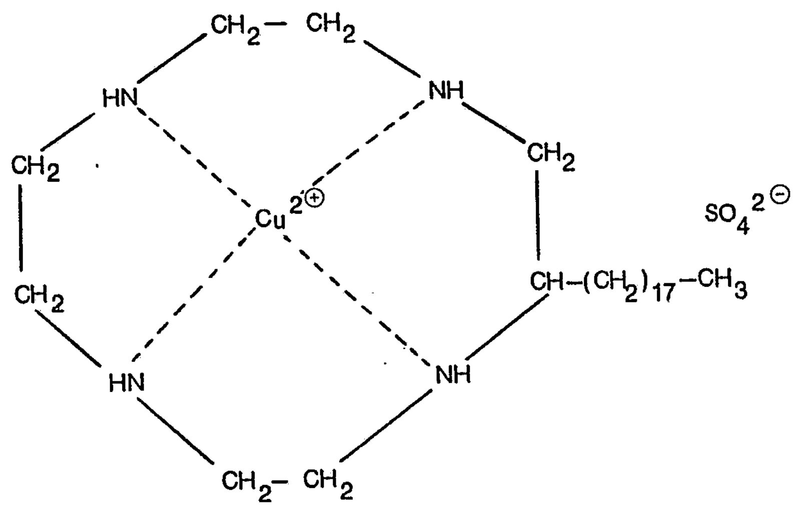

(112)

verwendet. Die Durchführung der Versuche erfolgte analog Beispiel 1. NaLS wird als 0,02 molare wässrige Lösung eingesetzt. Die Polyseife (111) wird als 1%ige wässrige Lösung zugegeben. Die Konzentration von Komplex (112) beträgt jeweils $2 . 10^{-3}$ Mol. (Der Cyaninfarbstoff (101) liegt in einer Konzentration von $5 . 10^{-6}$ Mol vor.)

Die Ergebnisse der Versuchstests, welche die Stabilitätssteigerung von Farbstoff (101) in Abhängigkeit vom eingesetzten Tensid bzw. von der verwendeten Tensidkombination zeigen, sind der folgenden Tabelle zu entnehmen. Der Stabilitätsfaktor der wässrigen Lösung von (101) ist willkürlich mit 1 festgesetzt worden.

TABELLE 2

Lichtechtheit des Farbstoffes (101)

| Tensid/Tensidkombination | Stabilitätsfaktor |
|---|---|
| Wasser | 1 |
| Polyseife (111) (Molekular-Gewicht 68700) | 6 |
| Polyseife (111) (M.G. 300 000) | 11 |
| Polyseife (111) (M.G. 68700)/Komplex (112) | 40 |
| NaLs | 70 |
| NaLs/Komplex/112) | 440 |
| Komplex (112) | ≫440 |

Beispiel 9

Der Cyaninfarbstoff der Formel (23) wird nach Beispiel 8 micelliert und bezüglich seiner Lichtechtheit untersucht. Die Versuchsergebnisse sind in Tabelle zusammengestellt.

TABELLE 3

Lichtechtheit des Farbstoffes (23)

| Tensid/Tensidkombination | Stabilitätsfaktor |
|---|---|
| Wasser | 1 |
| Polyseife (111) (M.G. 68700) | 19 |
| Polyseife (111) (M.G. 300000) | 31 |
| Polyseife (111) (M.G. 300000)/Komplex (112) | 240 |

Beispiel 10

Der Cyaninfarbstoff (23) wurde in $10^{-6}$ molarer Konzentration in einer wässrigen, $10^{-2}$ molaren Lösung von Cetyltrimethylammoniumbromid gelöst und gemäss Beispiel 1 bestrahlt. Die photochemischen Effekte wurden durch Messung des Absorptionsspektrums der Lösung verfolgt. Die optische Dichteabnahme im Cyaninmaximum betrug nach 70stündiger Bestrahlung 10—15%. Eine wesentliche Zunahme der Lichtstabilität wurde durch Zugabe von Komplex (112) erzielt. Hier ist nach gleicher Bestrahlungszeit bei einer 5—$10^{-4}$ molaren Konzentration des Komplexes keine nennenswerte Ausbleichung (<3%) mehr zu beobachten.

**Patentansprüche**

1. Verfahren zur Erhöhung der Lichtechtheit, Fluoreszenzpolarisation und Fluoreszenzquantenausbeute von Cyaninfarbstoffen, dadurch gekennzeichnet, dass man Cyaninfarbstoffe mit Hilfe micellärer Strukturen von a) Tensiden und/oder b) tensidischen Kronenätherkomplexen ein- oder zweiwertiger Uebergangsmetallkationen oder c) Tensidgemischen jeweils in Kombination mit nichttensidischen stickstoffhaltigen oder stickstoff- und sauerstoffhaltigen 16- oder 18-gliedrigen Kronenätherkomplexen ein- oder zweiwertiger Uebergangsmetallkationen stabilisiert.

2. Verfahren nach Anspruch 1, dadurch gekennzeichnet, dass man Cyaninfarbstoffe mit Hilfe micellärer Strukturen von Tensiden und nichttensidischen stickstoffhaltigen oder stickstoff- und sauerstoffhaltigen 16- oder 18-gliedrigen Kronenätherkomplexen ein- oder zweiwertiger Uebergangsmetallkationen stabilisiert.

3. Verfahren nach Anspruch 1, dadurch gekennzeichnet, dass als Cyaninfarbstoffe saure oder basische Cyanine, Hemicyanine, Streptocyanine, Merocyanine, Azacyanine, Oxonole, Hemioxonole oder Styrylfarbstoffe sowie drei- oder mehrkernige Methinfarbstoffe verwendet werden.

4. Verfahren nach Anspruch 3, dadurch gekennzeichnet, dass die Cyaninfarbstoffe kationisch, neutral, zwitterionisch oder anionisch sind und den Formeln

(1) 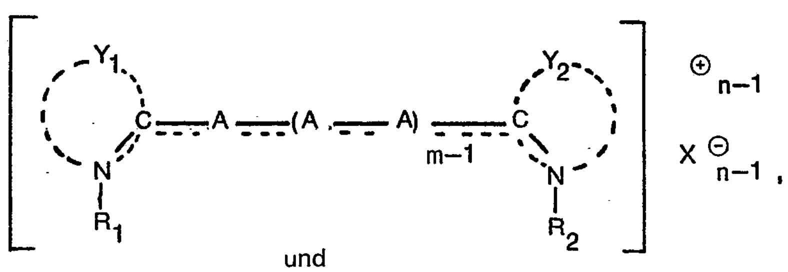 ,

und

(2) 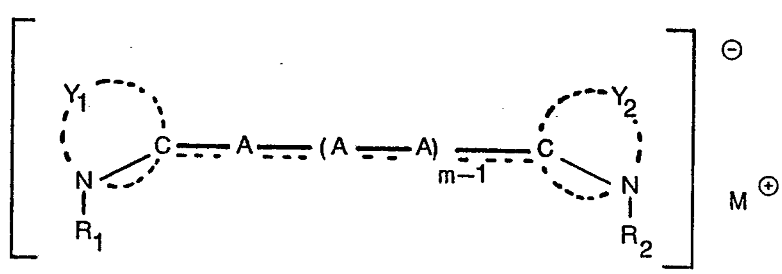

entsprechen, worin A eine gegebenenfalls substituierte Methingruppe oder höchstens ein A ein Stickstoffatom ist, $R_1$ und $R_2$ je ein gegebenenfalls substituiertes Alkyl oder Alkenyl mit bis zu 18 Kohlenstoffatomen und $Y_1$ und $Y_2$ je die notwendigen Atome zur Bildung eines gegebenenfalls substituierten Benzoxazol-, Benzthiazol-, Benzselenazol-, Benzimidazol-, Chinoxalin-Imidazol-, Pyrazin-Pyrrol- oder Indolringsystem sind, $X^{\ominus}$ ein Anion, $M^{\oplus}$ ein Kation, m eine ganze Zahl von 1 bis 6 und n 1 oder 2 ist.

5. Verfahren nach Anspruch 3, dadurch gekennzeichnet, dass die Cyaninfarbstoffe der Formel

(3) 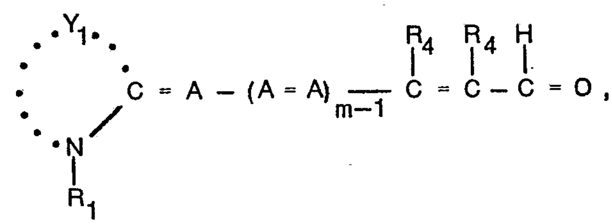

entsprechen, worin A, $R_1$, $Y_1$ und m die in Anspruch 4 angegebenen Bedeutungen haben und $R_4$ Wasserstoff, Alkyl mit 1 bis 4 Kohlenstoffatomen, insbesondere Methyl oder Aethyl, und ferner Phenyl sowie Nitro ist.

6. Verfahren nach Anspruch 3, dadurch gekennzeichnet, dass die Cyaninfarbstoffe den Formeln

(4) 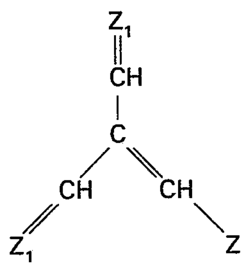 $\oplus$ $X_1^{\ominus}$ oder $\frac{Y^{2\ominus}}{2}$

(5) 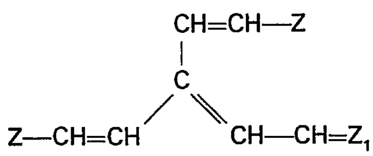 $2\oplus$ $2X^{\ominus}$ oder $Y^{2\ominus}$

(6) 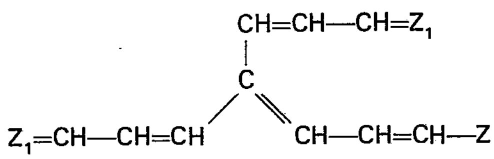 $\oplus$ $X^{\ominus}$ oder $\frac{Y^{2\ominus}}{2}$

entsprechen, worin Z und $Z_1$ ein mono- oder polycyclischer heterocyclischer Rest bedeutet, wobei Z ein zu $Z_1$ mesomerer Rest ist, $X_1^{\ominus}$ ein einwertiges und $Y^{2\ominus}$ ein zweiwertiges Anion ist.

7. Verfahren nach Anspruch 3, dadurch gekennzeichnet, dass die Cyaninfarbstoffe der Formel

(7) 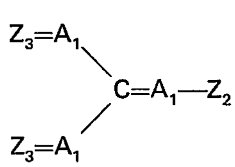

oder

(8) 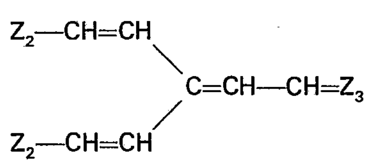

worin $A_1 = CH—$ oder $=CH—CH=CH—$, $Z_2$ ein am Stickstoffatom einfach positiv geladener, stickstoffheterocyclischer Rest, $Z_3$ ein zu $Z_2$ mesomerer, am Stickstoffatom ungeladener Rest, wobei mindestens einer der Reste $Z_2$ eine betainartige Struktur enthält, und die Cyaninfarbstoffe der Formeln (7) und (8)

entsprechend der Summe der Ladungen neutral oder positiv oder negativ geladen sein können und in den beiden letzteren Fällen ein entsprechendes Gegenion enthalten.

8. Stabilisierte Cyaninfarbstoffzubereitung, dadurch gekennzeichnet, dass sie eine Assoziation von Cyaninfarbstoffen und micellären Strukturen von a) Tensiden, und/oder b) tensidischen Kronenätherkomplexen ein- oder zweiwertiger Uebergangsmetallkationen oder c) Tensidgemischen jeweils in Kombination mit nichttensidischen stickstoffhaltigen oder stickstoff- und sauerstoffhaltigen 16- oder 18-gliedrigen Kronenätherkomplexen ein- oder zweiwertiger Uebergangsmetallkationen enthält.

9. Stabilisierte Cyaninfarbstoffzubereitung, dadurch gekennzeichnet, dass sie eine Assoziation von Cyaninfarbstoffen und micellären Strukturen enthält, die aus einem Gemisch

a) eines nichtionischen, anionischen, kationischen, zwitterionischen, amphoteren oder polymeren Tensids und eines nichttensidischen stickstoffhaltigen oder stickstoff- und sauerstoffhaltigen 16- oder 18-gliedrigen Kronenätherkomplexes ein- oder zweiwertiger Uebergangsmetallkationen und gegebenenfalls

b) eines tensidischen Kronenätherkomplexes ein- oder zweiwertiger Uebergangsmetallkationen zusammengesetzt sind.

10. Verfahren zur Herstellung von stabilisierten Cyaninfarbstoffzubereitungen gemäss Anspruch 8, dadurch gekennzeichnet, dass man Cyaninfarbstoffe in einer solchen Menge in micellierten wässrigen Lösungen bei Raumtemperatur löst, daß die Cyaninfarbstoffkonzentration 10mal grösser bis $10^6$mal kleiner ist als die Micellkonzentration der Micellbildner.

11. Verwendung der stabilisierten Cyaninfarbstoffzubereitungen nach Anspruch 8 in selektiven Farbfiltern, photographischen Aufzeichnungsmaterialien oder Farbstofflasern.

## Claims

1. A process for increasing the fastness to light, the fluorescence polarisation and fluorescence quantum yield of cyanine dyes, which process comprises stabilising cyanine dyes with the aid of micellar structures of a) surfactants and/or b) surfactant crown ether complexes of monovalent of divalent transition metal cations, or c) mixtures of surfactants, in each case in combination with non-surfactant, nitrogen-containing or nitrogen- and oxygen-containing 16- to 18-membered crown ether complexes of monovalent or divalent transition metal cations.

2. A process according to claim 1, which comprises stabilising cyanine dyes with the aid of micellar structures of surfactants and non-surfactant, nitrogen-containing or nitrogen- and oxygen-containing 16- or 18-membered crown ether complexes of monovalent or divalent transition metal cations.

3. A process according to claim 1, wherein acid or basic cyanines, hemicyanines, streptocyanines, merocyanines, azacyanines, oxonoles, hemioxonoles or styryl dyes, as well as trinuclear or polynuclear methine dyes, are used as cyanine dyes.

4. A process according to claim 3, wherein the cyanine dyes are cationic, neutral, zwitterionic or anionic and have the formulae

(1) 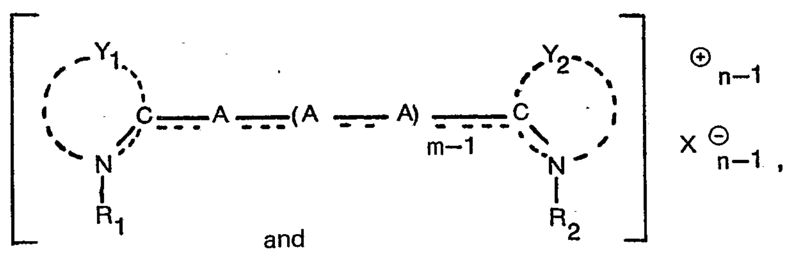

and

(2) 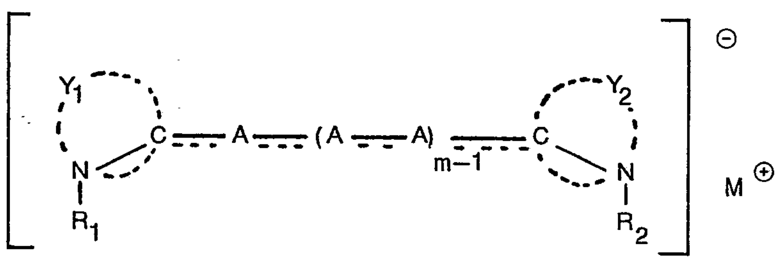

in which A is a substituted or unsubstituted methine group, or at most one A is a nitrogen atom, $R_1$ and $R_2$ are each a substituted or unsubstituted alkyl or alkenyl containing up to 18 carbon atoms and $Y_1$ and $Y_2$ are each the atoms necessary to form a substituted or unsubstituted benzoxazole, benzthiazole, benzselenazole, benzimidazole, quinoxaline, imidazole, pyrazine, pyrrole or indole ring system, $X^{\ominus}$ is an anion, $M^{\oplus}$ a cation, m is an integer from 1 to 6 and n is 1 or 2.

5. A process according to claim 3, wherein the cyanine dyes have the formula

(3) 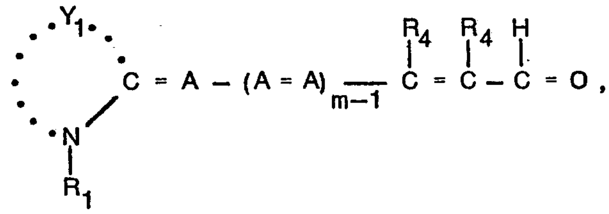

in which A, $R_1$, $Y_1$ and m are as defined in claim 4 and $R_4$ is hydrogen, alkyl having 1 to 4 carbon atoms, especially methyl or ethyl, or also phenyl or nitro.

6. A process according to claim 3, wherein the cyanine dyes have the formulae

(4) 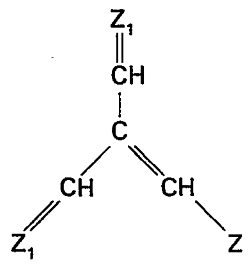 $\oplus$ $X_1^{\ominus}$ or $\frac{Y^{2\ominus}}{2}$

(5) 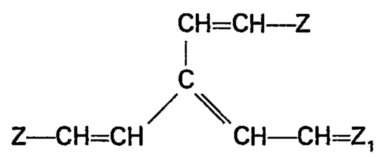 $2\oplus$ $2X^{\ominus}$ or $Y^{2\ominus}$

or

(6) 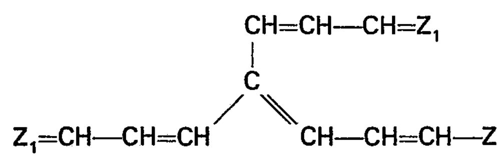 $\oplus$ $X^{\ominus}$ or $\frac{Y^{2\ominus}}{2}$

in which Z and $Z_1$ are a monocyclic or polycyclic heterocyclic radical and Z is a radical mesomeric to $Z_1$, $X_1^{\ominus}$ is a monovalent anion and $Y^{2\ominus}$ is a divalent anion.

7. A process according to claim 3, wherein the cyanine dyes have the formulae

(7) 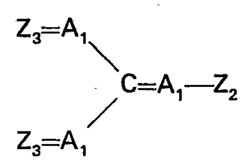

or

(8) 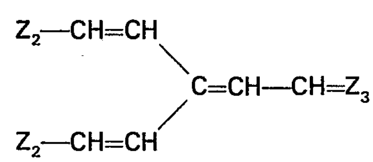

in which $A_1$ is =CH— or =CH—CH=CH, $Z_2$ is a nitrogen-heterocyclic radical having the single positive charge on the nitrogen atom and $Z_3$ is a radical which has no charge on the nitrogen atom and is mesomeric to $Z_2$, whilst at least one of the radicals $Z_2$ contains a betain-type structure and the cyanine dyes of the formulae (7) and (8) may have a neutral or positive or negative charge, corresponding to the sum of the charges, and the positively or negatively charged dyes contain a corresponding counter-ion.

8. A stabilised cyanine dyestuff composition which contains an association of cyanine dyes and micellar structures of a) surfactants and/or b) surfactant crown ether-complexes of monovalent or divalent transition metal cations, or c) mixtures of surfactants, in each case in combination with non-surfactant, nitrogen-containing or nitrogen- and oxygen-containing 16- to 18-membered crown ether complexes of monovalent or divalent transition metal cations.

9. A stabilised cyanine dyestuff composition which contains an association of cyanine dyes and micellar structures comprising a mixture of

a) a non-ionic, anionic, cationic, zwitterionic, amphoteric or polymeric surfactant and a non-surfactant, nitrogen-containing or nitrogen- and oxygen-containing 16- or 18-membered crown ether complex of monovalent or divalent transition metal cations, and optionally

b) a surfactant crown ether complex of monovalent or divalent transition metal cations.

10. A process for the preparation of a stabilised cyanine dyestuff composition according to claim 8, wherein cyanine dyes are dissolved at room temperature in an aqueous solution which has been brought into micellar form, in an amount such that the concentration of cyanine dye is 10 times greater to $10^6$ times smaller than the micelle concentration of the micelle-forming agents.

11. The use of a stabilised cyanine dye preparation according to claim 8 in selective colour filters, photographic recording materials or dye lasers.

**Revendications**

1. Procédé pour augmenter la stabilité à la lumière, la polarisation de fluorescence et le rendement quantique de fluorescence des colorants cyanines, caractérisé par le fait qu'on stabilise les colorants cyanines à l'aide de structures micellaires a) de tensio-actifs et/ou b) de complexes d'éthers cyliques tensio-actifs de cations métalliques de transition mono du divalents ou bien c) de mélanges de tensio-actifs à chaque fois en combinaison avec des complexes d'éthers cycliques non tensio-actifs azotés ou azotés et oxygénés, à 16 ou 18 chaînons, de cations métalliques de transition mono ou divalents.

2. Procédé selon la revendication 1, caractérisé par le fait qu'on stabilise les colorants cyanines à l'aide de structures micellaires de tensio-actifs et de complexes d'éthers cycliques non tensio-actifs azotés, ou azotés et oxygénés, à 16 ou 18 chaînons, de cations métalliques de transition mono ou divalents.

3. Procédé selon la revendication 1, caractérisé par le fait que sont utilisées comme colorants cyanines, des cyanines acides ou basiques, des hémicyanines, streptocyanines, des mérocyanines, des azacyanines, des oxonoles, des hémi-oxonoles ou des colorants de styryliques ainsi que des colorants méthiniques à trois ou plus de trois noyaux.

4. Procédé selon la revendication 3, caractérisé par le fait que les colorants cyanines sont cationiques, neutres, amphotères ou anioniques et correspondent aux formules

(1) 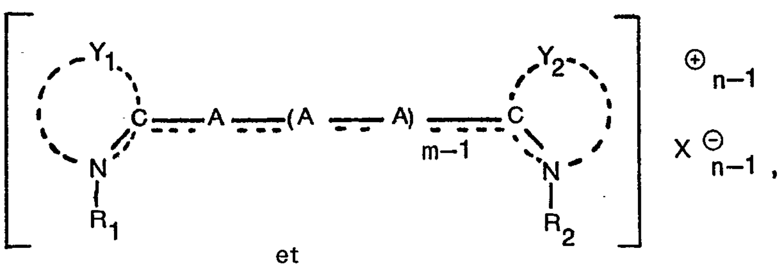

et

(2) 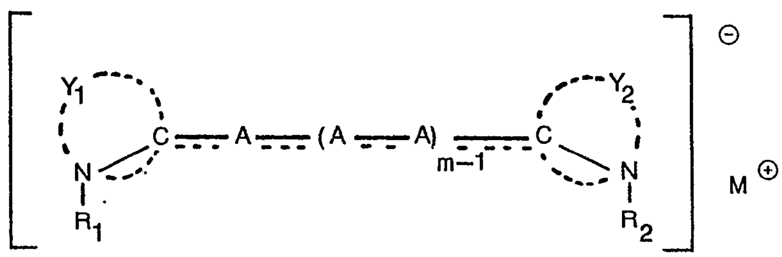

dans lesquelles A est un groupe méthinique éventuellement substitué ou tout au plus un A est un atome d'azote; $R_1$ et $R_2$ représentent chacun un groupe alkyle ou alcényle éventuellement substitué ayant jusqu'à 18 atomes de carbone, et $Y_1$ et $Y_2$ représentent chacun les atomes nécessaires pour former un système cyclique éventuellement substitué, benzoxazole, benzothiazole, benzosélénazole, benzimidazole, quanoxaline-imidazole, pyrazine, pyrrole ou indole; $X^{\ominus}$ est un anion; $M^{\oplus}$ est un cation; m est un nombre entier de 1 à 6, et n est 1 ou 2.

5. Procédé selon la revendication 3, caractérisé par le fait que les colorants cyanines correspondent à la formule

(3) 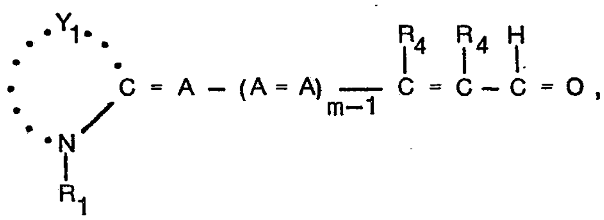

dans laquelle A, $R_1$, $Y_1$ et m ont les significations données dans la revendication 4, et $R_4$ est de l'hydrogène un groupe alkyle ayant 1 à 4 atomes de carbone, en particulier un groupe méthyle ou éthyle, et aussi un groupe phényle ainsi qu'un groupe nitro.

6. Procédé selon la revendication 3, caractérisé par le fait que les colorants cyanines correspondent aux formules

(4) 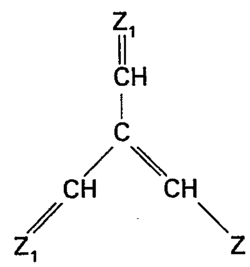 $\oplus$ $X_1^{\ominus}$ ou $\frac{Y^{2\ominus}}{2}$

(5) 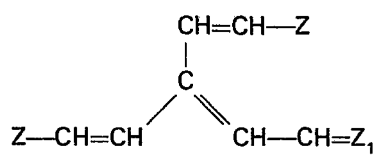 $2\oplus$ $2X^{\ominus}$ ou $Y^{2\ominus}$

(6) 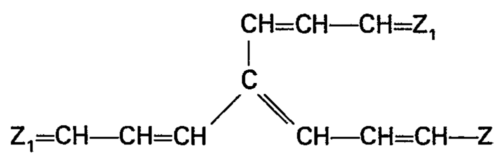 $\oplus$ $X^{\ominus}$ ou $\frac{Y^{2\ominus}}{2}$

dans lesquelles Z et $Z_1$ représentent chacun un reste hétérocyclique mononucléaire ou polynucléaire, Z étant un reste mésomère par rapport à Z; $X_1^{\ominus}$ est un anion monovalent et $Y^{2\ominus}$ est un anion divalent.

7. Procédé selon la revendication 3, caractérisé par le fait que les colorants cyanines correspondent aux formules

(7) 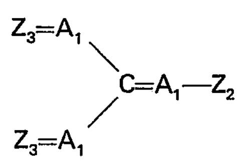

ou

(8) 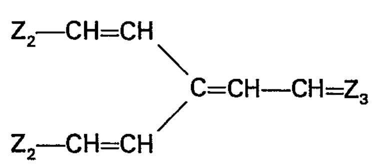

dans laquelle $A_1$ est =CH— ou =CH—CH=CH—; $Z_2$ est un reste hétérocyclique azoté à une seule charge positive sur le noyau d'azote; $Z_3$ est un reste mésomère par rapport à $Z_2$ non chargé sur l'atome d'azote; ou moins un des restes $Z_2$ contenant une structure de type bétaïne et que les colorants cyanines de formules (7) et (8) peuvent comporter des charges neutres ou positives ou négatives correspondant à la somme des charges et contiennent dans les deux derniers cas un ion opposé approprié.

8. Préparation de colorants cyanines stabilisés, caractérisée par le fait qu'elle contient une association de colorants cyanines de structures micellaires a) de tensio-actifs et/ou b) de complexes d'éthers cycliques tensio-actifs de cations métalliques de transition mono ou divalents ou c) de mélange de tensio-actifs à chaque fois en combinaison avec des complexes d'éthers cycliques non tensio-actifs azotés, ou azotés et oxygénés à 16 ou 18 chaînons, de cations métalliques de transition mono ou divalents.

9. Préparation de colorants cyanines stabilisés, caractérisée par le fait qu'elle contient une association de colorants cyanines et de structures micellaires qui sont constituées par un mélange

a) d'un tensio-actif non ionique, anionique, cationique, à ion ampholytiques, amphotère ou polymère et d'un complexe éther cyclique non tensio-actif azoté, ou azoté et oxygéné, à 16 ou 18 chaînons, de cations métalliques de transition mono ou divalents et éventuellement

b) un complexe éther cyclique tensio-actif de cations métalliques de transition mono ou divalents.

10. Procédé pour l'élaboration de préparations de colorants cyanines stabilisés selon la revendication 8, caractérisé par le fait qu'on dissout dans des solution aqueuse rendues micellaires, à la température du laboratoire, des colorants cyanines en une quantité telle que la concentration du colorant cyanine est 10 fois plus grande à $10^6$ fois plus petite que la concentration micellaire du formateur de micelles.

11. Utilisation des préparations de colorants cyanines stabilisés selon la revendication 8, dans les filtres colorés sélectifs, les matériaux d'enregistrement photographiques ou les lasers à colorants.

Fig. 1

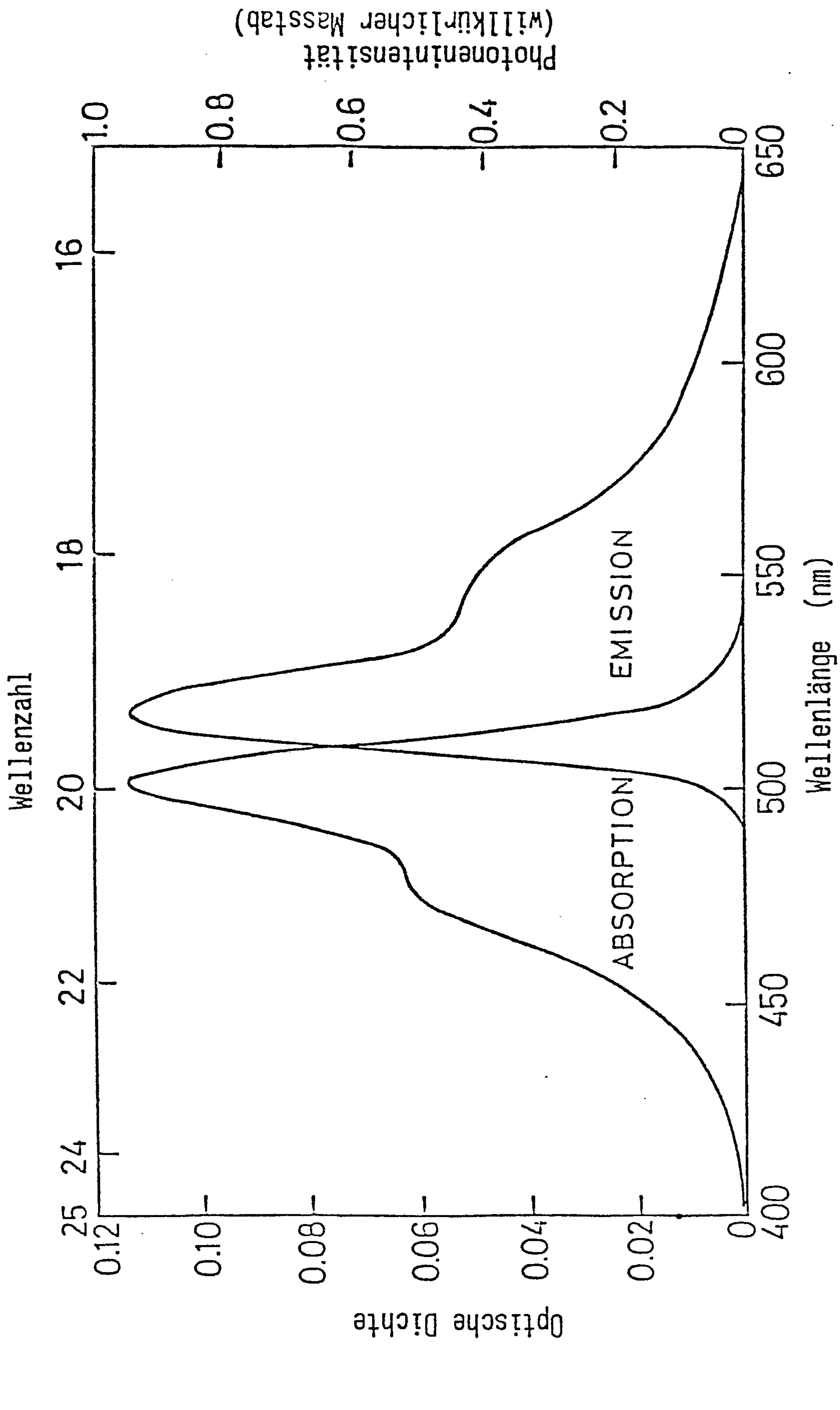
Wellenzahl
25
24
22
20
18
16
Photonenintensität
(willkürlicher Masstab)
1.0
0.8
0.6
0.4
0.2
0
Optische Dichte
0.12
0.10
0.08
0.06
0.04
0.02
0
ABSORPTION
EMISSION
400
450
500
550
600
650
Wellenlänge (nm)

Fig. 2